(19) Europäisches Patentamt
European Patent Office
Office européen des brevets

(11) EP 4 668 183 A1

(12) **EUROPEAN PATENT APPLICATION**
published in accordance with Art. 153(4) EPC

(43) Date of publication:
**24.12.2025 Bulletin 2025/52**

(21) Application number: **23922924.8**

(22) Date of filing: **12.12.2023**

(51) International Patent Classification (IPC):
***G06Q 10/0833*** *(2023.01)*

(52) Cooperative Patent Classification (CPC):
**G06Q 10/0833**

(86) International application number:
**PCT/JP2023/044510**

(87) International publication number:
**WO 2024/171591 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.02.2023 JP 2023021783**

(71) Applicants:
- **NEC Communication Systems, Ltd.**
  **Minato-ku**
  **Tokyo 108-0073 (JP)**
- **National University Corporation Kagawa University**
  **Takamatsu-shi, Kagawa 760-8521 (JP)**

(72) Inventors:
- **KAMATA Norihiko**
  **Tokyo 108-0073 (JP)**
- **KIDA Koji**
  **Takamatsu-shi, Kagawa 761-0396 (JP)**
- **YAMADA Shion**
  **Takamatsu-shi, Kagawa 761-0396 (JP)**

(74) Representative: **Betten & Resch**
**Patent- und Rechtsanwälte PartGmbB**
**Maximiliansplatz 14**
**80333 München (DE)**

# (54) INFORMATION PROCESSING DEVICE, PREDICATION MODEL, INFORMATION PROCESSING METHOD, AND PROGRAM

(57) The purpose of the present disclosure is to provide an information processing device with which it is possible to appropriately detect abnormality included in commodity handling histories. An information processing device according to the present disclosure comprises: an acquisition unit that acquires the history of handling of a commodity of interest that indicates the history of handling of the commodity of interest that is to be monitored; a prediction unit that predicts a quantity after handling in relation to the handling included in the history of handling of the commodity of interest and calculates a predicted quantity of the commodity of interest on the basis of the history of handling of the commodity of interest, by using a prediction model having been trained using production information regarding production of a commodity, handing content information that indicates the handling content of the commodity, and quantity information that indicates quantities before and after handling of the commodity, as training data; and an abnormality determination unit that determines, on the basis of the difference between the quantity of the commodity of interest after handling in the history of handling of the commodity of interest and the predicted quantity of the commodity of interest calculated by the prediction unit, whether or not there is abnormality in the quantity change indicated by the history of handling of the commodity of interest.

EP 4 668 183 A1

START
ACQUIRE TARGET PRODUCT HANDLING HISTORY
S1
CALCULATE TARGET PRODUCT PREDICTION AMOUNT USING PREDICTION MODEL
S2
DETERMINE WHETHER THERE IS ABNORMALITY IN AMOUNT CHANGE INDICATED BY TARGET PRODUCT HANDLING HISTORY BASED ON DIFFERENCE BETWEEN POST-HANDLING AMOUNT OF TARGET PRODUCT AND TARGET PRODUCT PREDICTION AMOUNT
S3
END

Fig. 2

## Description

### Technical Field

The present disclosure relates to an information processing device, a prediction model, an information processing method, and a program.

### Background Art

A technology related to a traceability system that manages articles such as food is known. The traceability system is a system in which a plurality of business operators records a history of handling of an article and a plurality of consumers tracks the article. For example, in a case of tracking a handling history of food recorded by a business operator using the traceability system, a user using the system can find the food falsification by comparing the food display with the food handling history.

As a related technology, PTL 1 discloses an article processing management system including a distributed storage system having each of a plurality of arithmetic devices as a node, a tracking information creation unit that creates tracking information, and a storage request unit that outputs a storage request of the tracking information.

The article processing management system disclosed in PTL 1 performs article traceability management for the falsification of a handling history related to a transaction between business operators. For example, the article processing management system detects a handling history in which the weight is falsified by checking whether there is an increase or decrease in the weight of the article exceeding a threshold value in a transaction between business operators. The article processing management system detects falsification of a handling history and distributedly manages the handling history on a blockchain that is a database that can be corrected. As a result, the article processing management system prevents falsification of the handling history registered once.

### Citation List

### Patent Literature

PTL 1: JP 6785701 B2

### Summary of Invention

### Technical Problem

The handling history of articles includes a history related to a transaction of articles between business operators targeted by PTL 1, and a history related to the process of articles in the business operator. Examples of the falsification of a handling history related to the process of an article in a business operator include the falsification of a value such as weight in the processing treatment in which the amount of food changes due to waste loss, and the falsification of qualitative data such as a production area and a brand in the production process for registering a production area and the like. The technique disclosed in PTL 1 is directed to the falsification of the handling history regarding transactions between business operators, and does not mention the falsification in the business operator.

In view of the above-described problems, an object of the present disclosure is to provide an information processing device, an information processing method, and a program capable of appropriately detecting an abnormality included in a handling history of a product.

### Solution to Problem

An information processing device according to the present disclosure includes an acquisition unit for acquiring a target product handling history indicating a history of handling of a target product to be audited, a prediction unit for predicting a post-handling amount of handling included in the target product handling history using a prediction model trained based on the target product handling history using production information about production of a product, handling content information indicating a handling content of the product, and amount information indicating pre- and post- handling amounts of the product as training data to calculate a target product prediction amount, and an abnormality determination unit for determining whether there is an abnormality in an amount change indicated by the target product handling history based on a difference between a post-handling amount of the target product in the target product handling history and the target product prediction amount calculated by the prediction unit.

An information processing method according to the present disclosure includes an acquisition step of acquiring a target product handling history indicating a history of handling of a target product to be audited, a prediction step of predicting a post-handling amount of handling included in the target product handling history using a prediction model trained based on the target product handling history using production information about production of a product, handling content information indicating a handling content of the product, and amount information indicating pre- and post- handling amounts of the product as training data to calculate a target product prediction amount, and an abnormality determination step of determining whether there is an abnormality in an amount change indicated by the target product handling history based on a difference between a post-handling amount of the target product in the target product handling history and the target product prediction amount calculated by the prediction step.

A program according to the present disclosure causes a computer to execute an acquisition step of acquiring a target product handling history indicating a history of handling of a target product to be audited, a prediction step of predicting a post-handling amount of handling included in the target product handling history using a prediction model trained based on the target product handling history using production information about production of a product, handling content information indicating a handling content of the product, and amount information indicating pre- and post- handling amounts of the product as training data to calculate a target product prediction amount, and an abnormality determination step of determining whether there is an abnormality in an amount change indicated by the target product handling history based on a difference between a post-handling amount of the target product in the target product handling history and the target product prediction amount calculated by the prediction step.

## Advantageous Effects of Invention

An information processing device, an information processing method, and a program according to the present disclosure can appropriately detect an abnormality included in a handling history of a product.

## Brief Description of Drawings

[Fig. 1] Fig. 1 is a block diagram illustrating a configuration of an information processing device according to the present disclosure.

[Fig. 2] Fig. 2 is a flowchart illustrating a process performed by the information processing device according to the present disclosure.

[Fig. 3] Fig. 3 is a block diagram illustrating a configuration of an information processing system according to the present disclosure.

[Fig. 4] Fig. 4 is a block diagram illustrating a configuration of a handling history shaping unit according to the present disclosure.

[Fig. 5] Fig. 5 is a diagram illustrating input/output data in a change amount training data generation unit according to the present disclosure.

[Fig. 6] Fig. 6 is a diagram illustrating a method of generating change amount training data from a handling history according to the present disclosure.

[Fig. 7] Fig. 7 is a diagram illustrating input/output data in a food feature vector generation unit according to the present disclosure.

[Fig. 8] Fig. 8 is a diagram illustrating input/output data in a prediction model training unit according to the present disclosure.

[Fig. 9] Fig. 9 is a flowchart illustrating a training process performed by the information processing system according to the present disclosure.

[Fig. 10] Fig. 10 is a block diagram illustrating a configuration of an abnormality detection unit according to the present disclosure.

[Fig. 11] Fig. 11 is a diagram illustrating input/output data in an explanatory variable collection unit according to the present disclosure.

[Fig. 12] Fig. 12 is a diagram for describing a method of generating collection data from a handling history according to the present disclosure.

[Fig. 13] Fig. 13 is a diagram illustrating input/output data in a change amount prediction unit according to the present disclosure.

[Fig. 14] Fig. 14 is a diagram illustrating input/output data in a prediction error threshold value determination unit according to the present disclosure.

[Fig. 15] Fig. 15 is a flowchart illustrating a process performed by an abnormality detection unit according to the present disclosure.

[Fig. 16] Fig. 16 is a block diagram illustrating a configuration of an information processing system according to the present disclosure.

[Fig. 17] Fig. 17 is a diagram illustrating input/output data in a production information combination creation unit according to the present disclosure.

[Fig. 18] Fig. 18 is a block diagram illustrating a configuration of an abnormality detection unit according to the present disclosure.

[Fig. 19] Fig. 19 is a diagram illustrating input/output data in a production information combination coverage unit according to the present disclosure.

[Fig. 20] Fig. 20 is a diagram illustrating input/output data in a handling history consistency determination unit according to the present disclosure.

[Fig. 21] Fig. 21 is a flowchart illustrating a process performed by an abnormality detection unit according to the present disclosure.

[Fig. 22] Fig. 22 is a flowchart illustrating a process performed by the abnormality detection unit according to the present disclosure.

[Fig. 23] Fig. 23 is a block diagram illustrating a configuration of an information processing system according to the present disclosure.

[Fig. 24] Fig. 24 is a diagram illustrating input data in a production information grouping unit according to the present disclosure.

[Fig. 25] Fig. 25 is a diagram illustrating output data in a production information grouping unit according to the present disclosure.

[Fig. 26] Fig. 26 is a block diagram illustrating a configuration of a handling history shaping unit according to the present disclosure.

[Fig. 27] Fig. 27 is a diagram illustrating input/output data in the food feature vector generation unit according to the present disclosure.

[Fig. 28] Fig. 28 is a flowchart illustrating a process performed by the information processing system according to the present disclosure.

[Fig. 29] Fig. 29 is a flowchart illustrating a process performed by the production information grouping unit according to the present disclosure.

[Fig. 30] Fig. 30 is a diagram illustrating input data in a production information associating unit according to the present disclosure.

[Fig. 31] Fig. 31 is a diagram illustrating output data in the production information associating unit according to the present disclosure.

[Fig. 32] Fig. 32 is a flowchart illustrating a classification process performed by the information processing system according to the present disclosure.

[Fig. 33] Fig. 33 is a block diagram illustrating a configuration of an abnormality determination unit according to the present disclosure.

[Fig. 34] Fig. 34 is a flowchart illustrating a process performed by the abnormality determination unit according to the present disclosure.

[Fig. 35] Fig. 35 is a flowchart illustrating a process performed by the abnormality determination unit according to the present disclosure.

[Fig. 36] Fig. 36 is a block diagram illustrating a configuration of the information processing system according to the present disclosure.

[Fig. 37] Fig. 37 is a diagram illustrating characteristics of a handling history stored in a blockchain according to the present disclosure.

[Fig. 38] Fig. 38 is a diagram illustrating input/output data in a handling history food-based classification unit according to the present disclosure.

[Fig. 39] Fig. 39 is a flowchart illustrating the process of the handling history food-based classification unit according to the present disclosure.

[Fig. 40] Fig. 40 is a block diagram illustrating a hardware configuration of a computer that implements the information processing system and the like according to the present disclosure.

## Example Embodiment

Hereinafter, example embodiments of the present disclosure will be described in detail with reference to the drawings. In the drawings, the same or related elements are denoted by the same reference signs. For clarity of description, redundant description will be omitted as necessary.

<First example embodiment>

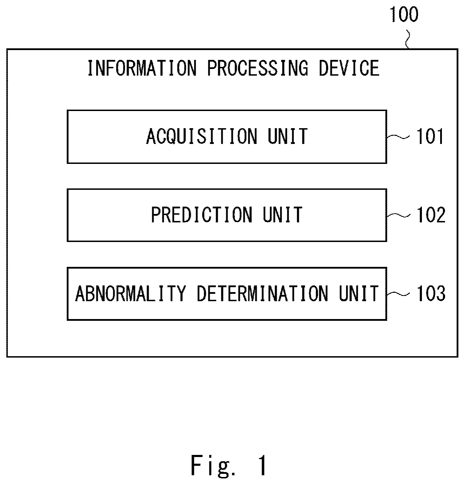

First, the first example embodiment will be described. Fig. 1 is a block diagram illustrating a configuration of an information processing device 100 according to the present disclosure. The information processing device 100 includes an acquisition unit 101, a prediction unit 102, and an abnormality determination unit 103.

The acquisition unit 101 acquires a target product handling history indicating a history of handling of a target product to be audited. Based on the target product handling history, the prediction unit 102 predicts the post-handling amount for the handling included in the target product handling history using the prediction model, and calculates the target product prediction amount.

The prediction model is trained using, as training data, production information related to production of a product, handling content information indicating handling content of the product, and amount information indicating pre- and post-handling amounts of the product. The abnormality determination unit 103 determines whether there is an abnormality in the amount change indicated by the target product handling history based on the difference between the post-handling amount of the target product in the target product handling history and the target product prediction amount calculated by the prediction unit.

The information processing device 100 includes a processor, a memory, and a storage device as configurations, not illustrated. The storage device stores a computer program in which the processing according to the present disclosure is implemented. The processor causes the computer program to be read from the storage device into a memory, and is capable of executing the computer program. As a result, the processor implements the functions of the acquisition unit 101, the prediction unit 102, and the abnormality determination unit 103.

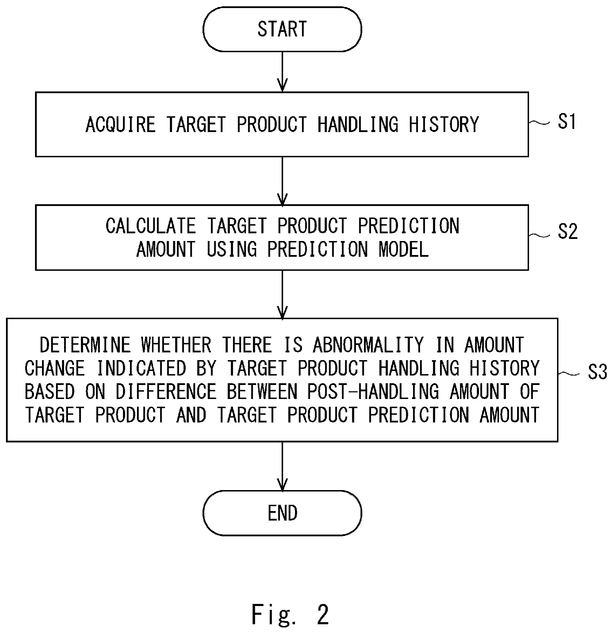

Next, the process performed by the information processing device 100 will be described with reference to Fig. 2. Fig. 2 is a flowchart illustrating a process performed by the information processing device 100.

First, the acquisition unit 101 acquires a target product handling history (S1). Next, the prediction unit 102 calculates the target product prediction amount using the prediction model (S2). The abnormality determination unit 103 determines whether there is an abnormality in the amount change indicated by the target product handling history based on the difference between the post-handling amount of the target product and the target product prediction amount.

With such a configuration, according to the information processing device 100, it is possible to appropriately detect an abnormality included in the handling history of the product.

<Second example embodiment>

Subsequently, the second example embodiment will be described. The second example embodiment is a specific example of the above-described first example embodiment. First, an outline of an information processing system 10 according to the present disclosure will be described.

The information processing system 10 is an example of the information processing device 100 described above. The information processing system 10 is an information processing system capable of determining whether a change in an amount of the product is normal or abnormal from a difference between a prediction value and an input value of the post-handling amount of the product in order to detect the falsification of the product.

The amount of the product indicates a quantitative feature of the product. The amount of the product may be represented using quantitative data such as a weight, a volume, a length, the number, or an apparent area of the product, for example. The amount is not limited thereto, and various quantitative data representing features of the product may be used as the amount of the product. In the present example embodiment, the description will be given using the weight of the product as an example of the amount of the product. The information processing system 10 acquires weight information indicating amounts before and after handling the product, and performs a predetermined process using the weight information.

In the present disclosure, "handling" indicates various procedures related to a product to be tracked. For example, in a case where the product is livestock or the like, examples of handling include birth registration, processing, transaction, and the like. The handling may be a process performed between the business operators or a process performed within the business operator.

In the present example embodiment, the training process of creating a change amount prediction model for predicting a post-handling weight of the product is performed, and whether a weight change indicated by a handling history of the product is normal or abnormal is determined using the change amount prediction model. The handling history is information related to a history of handling of a product. The change amount prediction model can be trained using, for example, information about at least one of a production area, a brand, and a production business operator of the product as production information. In the present example embodiment, it is assumed that a sufficient amount of handling history for training the change amount prediction model is accumulated for each production area, brand, or production business operator, and that a new type of food is not added.

The information processing system 10 acquires the past handling history from the blockchain, collects the handling content and the values of the post-handling weight and the like from the handling history regarding the process in the business operator, the values of the pre-handling weight and the like from the handling history added immediately before the handling history, and the production information such as the production area, the brand, and the production business operator from the handling history in the production process, and generates the change amount training data.

The production information is information related to the quality or the property of the product. The production information may be represented using qualitative data that describes the quality or property of the product. The production information is, for example, information indicating a production area, a brand, a production business operator, a producer, a gender, a breeding method, an agricultural method, a feed, a grade, an award history, certification, authentication, or the like of a product. The production information is not limited thereto, and various types of qualitative data related to the quality or property of the product can be used as the production information. The production information is registered, for example, in a production process in the business operator. The production information may be registered in processing after the production process.

The information processing system 10 predicts the post-handling weight in the handling history using the change amount prediction model generated based on the change amount training data, and detects the abnormality of the weight change indicated by the handling history using the prediction result. As a result, it is possible to automatically detect the falsification of the weight in the processing treatment in the business operator.

The information processing system 10 collects information about a handling history of the product from, for example, a production business operator that performs a production process of the product, a processing business operator that performs the subsequent processing treatment, and the like. The product is an article that can be tracked, such as food or medicine. The product may include livestock and the like. In the present example embodiment, a food pig will be described as an example of a product. In the present disclosure, a tracking target will be referred to as a "product" in various types of handling performed from the time of production to the final consumer.

The handling history is, for example, information in which a product, handling content, a weight of a product after handling, a handling business operator, and a handling date and time are associated. The handling history is not limited thereto, and may include various types of information related to the product.

For example, a pig production business operator registers information at the time of birth of a pig in the information processing system 10. The processing business operator that performs processing registers information about handling regarding processing. The information processing system 10 accumulates handling histories and manages the handling histories indicating handling histories. As a result, the information processing system 10 can perform product traceability management.

The user of the information processing system 10 can track the tracking target product by tracing the handling history. The user of the information processing system 10 is, for example, a production business operator, a processing business operator, a person in charge of audit, an end user (final consumer), or the like.

(Configuration of information processing system 10)

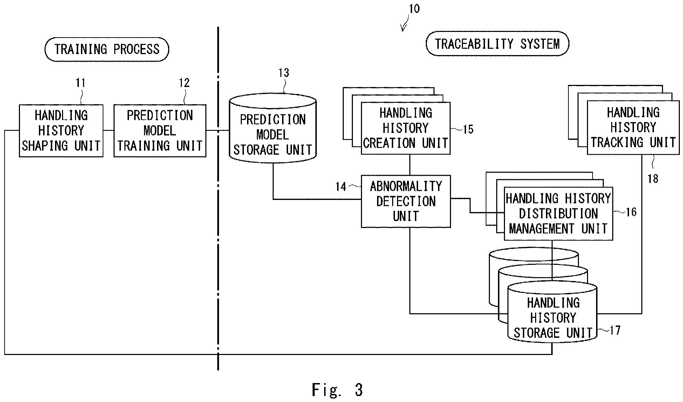

A configuration of the information processing system 10 will be described with reference to Fig. 3. Fig. 3 is a block diagram illustrating a configuration of the information processing system 10.

The information processing system 10 includes a handling history shaping unit 11, a prediction model training unit 12, a prediction model storage unit 13, an abnormality detection unit 14, a handling history creation unit 15, a handling history distribution management unit 16, a handling history storage unit 17, and a handling history tracking unit 18. In the drawing, the training processing function is indicated left of the one-dot chain line, and the traceability system is indicated right of the one-dot chain line.

In the present example embodiment, the information processing system 10 will be described as a configuration including both the training processing function and the traceability system function. The configuration of the information processing system 10 can be changed as appropriate. For example, the information processing system 10 may be configured to include only the traceability system function, and another information processing device may be configured to include the training processing function.

The handling history shaping unit 11 shapes information related to the handling history. The prediction model training unit 12 trains the change amount prediction model. The prediction model storage unit 13 stores the change amount prediction model. The abnormality detection unit 14 detects an abnormality included in the handling history. The handling history creation unit 15 creates a handling history. The handling history distribution management unit 16 distributedly manages the handling history. The handling history storage unit 17 stores a handling history. The handling history tracking unit 18 tracks the handling history in accordance with a user input. Details of main functional units will be described below.

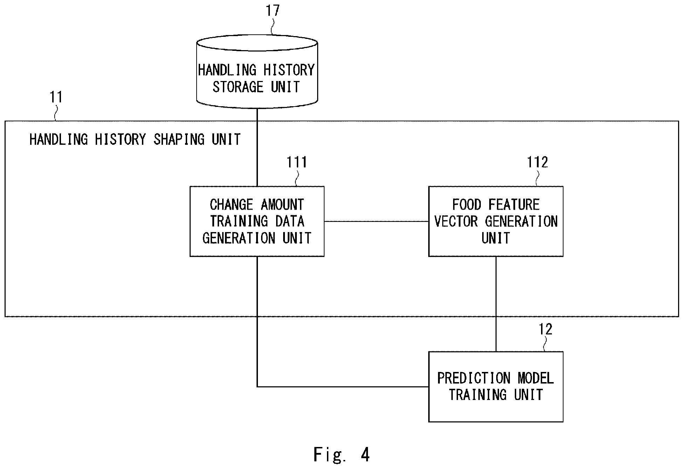

Fig. 4 is a block diagram illustrating a configuration of the handling history shaping unit 11. The handling history shaping unit 11 includes a change amount training data generation unit 111 and a food feature vector generation unit 112.

The change amount training data generation unit 111 outputs data to the food feature vector generation unit 112 and the prediction model training unit 12 using the input data acquired from the handling history storage unit 17.

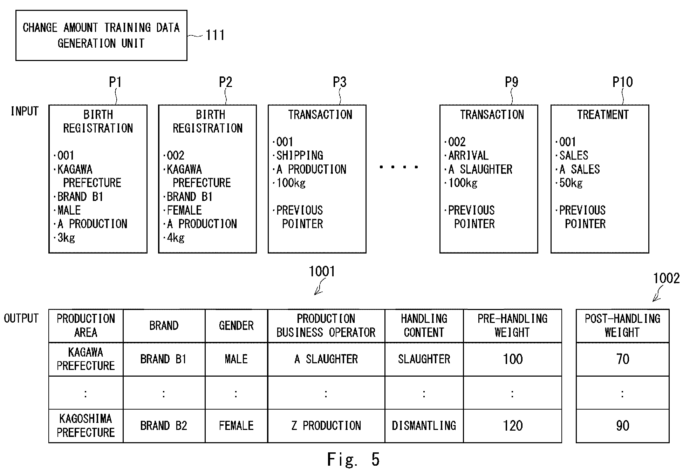

Fig. 5 is a diagram illustrating input/output data in the change amount training data generation unit 111. As indicated by the input data, the handling history storage unit 17 stores the handling histories P1, P2, ..., and P10 in chronological order. Each of the handling histories P1, P2, ..., and P10 indicates a handling history registered by the business operator. In the example of the drawing, "birth registration" indicated in the handling histories P1 and P2 indicates information registered at the time of birth of the pig.

"Transaction" indicated in the handling histories P3 and P9 indicates information registered at the time of transaction between the business operators. "Treatment" indicated in the handling history P10 indicates information registered at the time of treatment such as processing and sales in the business operator. The same applies to the following drawings.

The handling history related to birth registration includes, for example, information indicating a food ID, a production area, a brand, a gender, a production business operator name, and a weight at the time of birth registration. The food ID is identification information for identifying food. The production area, the brand, the gender, the production business operator name, and the weight at the time of birth registration are examples of the production information. For example, in the handling history P1, the food ID is "001", the production area is "Kagawa prefecture", the brand is "brand B1", the gender is "male", the production business operator name is "A production", and the weight at the time of birth registration is "3 kg".

The handling history regarding the transaction between the business operators includes, for example, information indicating a food ID, transaction content, a business operator name, and a post-handling weight. In the example of the handling history P3, the food ID is "001", the transaction content is "shipping", the business operator name is "A production", and the post-handling weight is "100 kg".

The handling history regarding the treatment in the business operator includes, for example, information indicating a food ID, treatment content, a business operator name, and a post-handling weight. In the example of the handling history P10, the food ID is "001", the treatment content is "sales", the business operator name is "A sales", and the post-handling weight is "50 kg". Since the handling history storage unit 17 stores the handling histories in chronological order, information about different products can be continuously registered, for example, as illustrated in the handling histories P1 and P2.

As illustrated in the output data, the change amount training data generation unit 111 outputs an explanatory variable 1001 and a target variable 1002. The explanatory variable 1001 may include information about a production area, a brand, a gender, a production business operator, a handling content, and a pre-handling weight. The target variable 1002 includes information about the post-handling weight.

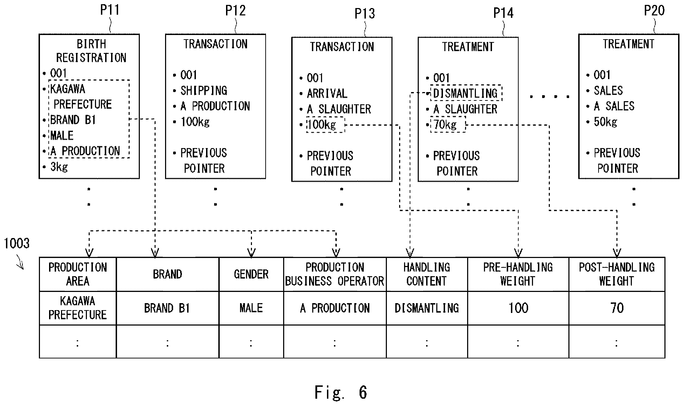

The internal process of the change amount training data generation unit 111 will be described with reference to Fig. 6. Fig. 6 is a diagram for describing a method of generating change amount training data from a handling history. As an example, it is assumed that handling histories P11, P12, ..., and P20 are stored in the handling history storage unit 17. The handling histories P11, P12, ..., and P20 indicate handling histories related to a product with a food ID "001".

First, the change amount training data generation unit 111 acquires the handling histories P11, P12, ..., and P20 stored in chronological order from the handling history storage unit 17. It is assumed that attention is paid to the handling history P14. The change amount training data generation unit 111 acquires the handling content "dismantling" and the post-handling weight "70 kg" from the handling history of the processing treatment of interest.

The change amount training data generation unit 111 acquires the production area, the brand, the gender, and the like from the handling history P11 of the birth registration having the food ID same as that of the handling history of the processing treatment of interest. The change amount training data generation unit 111 refers to the handling history P13 having the same food ID registered immediately before the handling history P14 of interest. The change amount training data generation unit 111 acquires the weight "100 kg" of the handling history P13 as the pre-handling weight of the handling history P14. In this way, the change amount training data generation unit 111 collects data from the handling history storage unit 17 and acquires collection data 1003. The change amount training data generation unit 111 repeats the collection process of the production information, the handling content, the post-handling weight, and the pre-handling weight as many times as the number of handling histories related to the process in the business operator. As a result, the change amount training data generation unit 111 generates the change amount training data.

The change amount training data generation unit 111 transmits the explanatory variable 1001 as illustrated in Fig. 5 to the food feature vector generation unit 112. The change amount training data generation unit 111 transmits the target variable 1002 to the prediction model training unit 12.

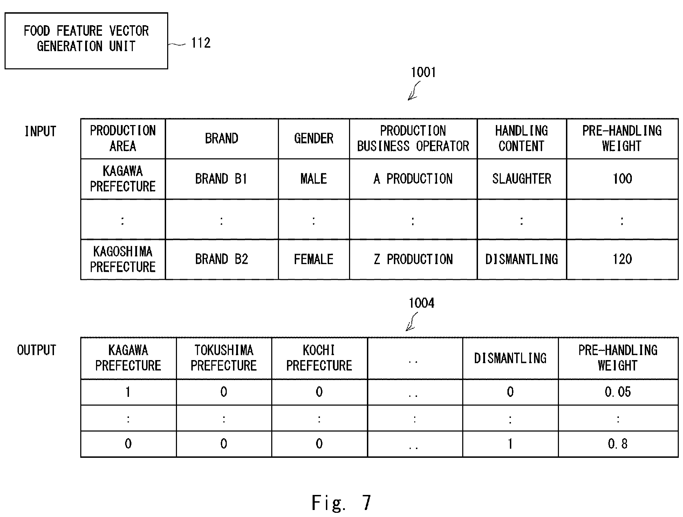

The internal process of the food feature vector generation unit 112 will be described with reference to Fig. 7. Fig. 7 is a diagram illustrating input/output data in the food feature vector generation unit 112.

First, the food feature vector generation unit 112 acquires the explanatory variable 1001 from the change amount training data generation unit 111. Next, food feature vector generation unit 112 performs preprocessing such as one-hot encoding on the qualitative variable included in explanatory variable 1001. Subsequently, food feature vector generation unit 112 performs preprocessing such as standardization on the quantitative variable included in the explanatory variable 1001. The food feature vector generation unit 112 transmits a generated food feature vector 1004 to the prediction model training unit 12.

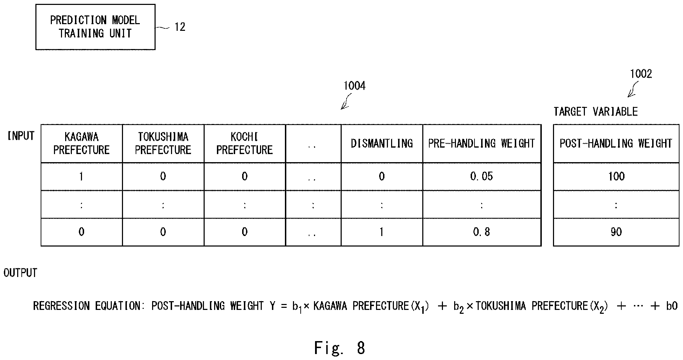

The internal process of the prediction model training unit 12 will be described with reference to Fig. 8. Fig. 8 is a diagram illustrating input/output data in the prediction model training unit 12.

The prediction model training unit 12 acquires the food feature vector 1004 from the food feature vector generation unit 112 and acquires the target variable 1002 from the change amount training data generation unit 111. The prediction model training unit 12 performs multiple regression analysis using a set of the food feature vector 1004 and the target variable 1002. As a result, the prediction model training unit 12 generates a change amount prediction model that predicts the post-handling weight.

In the multiple regression analysis, the target variable Y to be predicted can be expressed by the following Formula (1) using explanatory variables X1, X2, X3, ... and partial regression coefficients b1, b2, b3, ...

$$Y = b1X1 + b2X2 + b3X3 + \ldots + b0 \quad (1)$$

where the target variable Y is a post-handling weight to be predicted. X1, X2, X3, ... are scores related to respective elements included in the food feature vector 1004. X1, X2, X3, ... are, for example, scores respectively related to "Kagawa prefecture", "Tokushima prefecture", "Kochi prefecture", ... The partial regression coefficients b1, b2, b3, ... indicate weights for the respective elements. b0 represents a bias.

In the example, the multiple regression analysis is used as a method of training the change amount prediction model, but a method such as k-nearest neighbor algorithm, support vector regression, or deep learning may be used, and the present invention is not limited thereto. The prediction model training unit 12 stores the generated change amount prediction model in the prediction model storage unit 13.

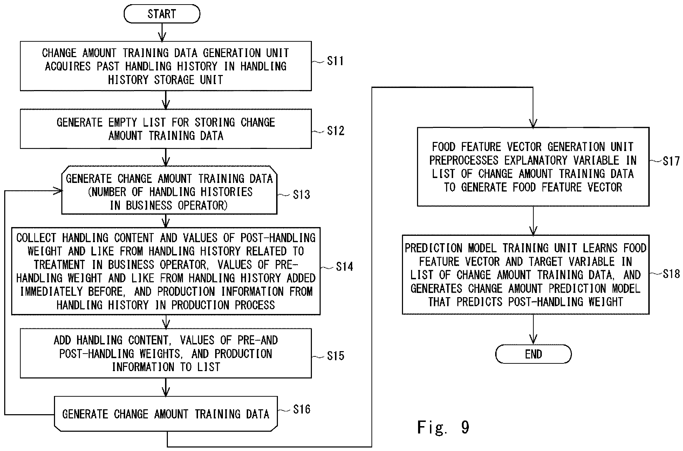

The training process performed by the information processing system 10 will be described with reference to Fig. 9. Fig. 9 is a flowchart illustrating the training process performed by the information processing system 10.

First, the change amount training data generation unit 111 (see Fig. 4) acquires the past handling history in the handling history storage unit 17 (S11). The change amount training data generation unit 111 generates an empty list for storing the change amount training data (S12). The change amount training data generation unit 111 generates change amount training data (S13). The change amount training data generation unit 111 can generate the number of pieces of change amount training data related to the number of handling histories in the business operator.

Subsequently, the change amount training data generation unit 111 collects the handling content and the values of the post-handling weight and the like from the handling history related to the process in the business operator, the values of the pre-handling weight and the like from the handling history added immediately before, and the production information from the handling history in the production process (S14).

Specifically, first, the change amount training data generation unit 111 acquires the handling history stored in chronological order from the handling history storage unit 17. Next, the change amount training data generation unit 111 focuses on one handling history and acquires the handling content and the post-handling weight in the handling history. Subsequently, the change amount training data generation unit 111 acquires production information with reference to a handling history of birth registration of a product having the food ID same as that of the handling history of interest. The production information may include, for example, information such as a production area, a brand, and a gender of the product. The change amount training data generation unit 111 refers to a handling history having the same food ID registered immediately before the handling history of interest, and acquires the pre-handling weight of the handling history of interest.

The change amount training data generation unit 111 adds the handling content, the values of the pre- and post-handling weights or the like, and the production information to the list (S15). The change amount training data generation unit 111 returns the process to step S13 and repeats generation of the change amount training data (S16).

Subsequently, the food feature vector generation unit 112 preprocesses the explanatory variables in the list of the change amount training data to generate a food feature vector (S17). The prediction model training unit 12 generates a change amount prediction model that learns the food feature vector and the target variable in the list of the change amount training data, and predicts the post-handling weight (S18).

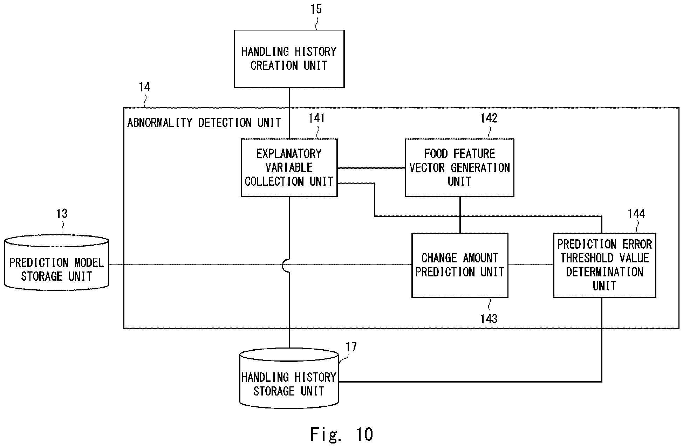

The abnormality detection unit 14 will be described with reference to Fig. 10. Fig. 10 is a block diagram illustrating a configuration of the abnormality detection unit 14. The abnormality detection unit 14 detects an abnormality in the target product handling history to be examined using the above-described change amount prediction model. The abnormality detection unit 14 includes an explanatory variable collection unit 141, a food feature vector generation unit 142, a change amount prediction unit 143, and a prediction error threshold value determination unit 144.

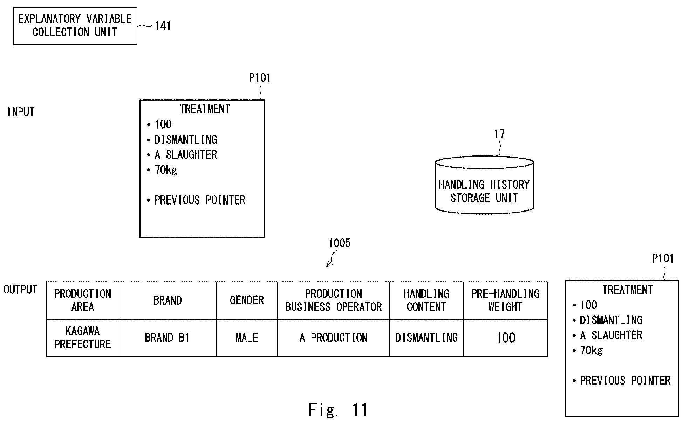

The internal process of the explanatory variable collection unit 141 will be described with reference to Fig. 11. Fig. 11 is a diagram illustrating input/output data in the explanatory variable collection unit 141.

The explanatory variable collection unit 141 is an example of the above-described acquisition unit 101. The explanatory variable collection unit 141 acquires a target product handling history indicating a history of handling of a target product to be audited. The explanatory variable collection unit 141 receives a new handling history P101 as the target product handling history from the handling history creation unit 15.

Next, the explanatory variable collection unit 141 acquires a past handling history related to the food same as the target food related to the handling history P101 from the handling history storage unit 17. The explanatory variable collection unit 141 acquires the handling history by referring to the handling history regarding the same food using, for example, the food ID stored in the handling history storage unit 17.

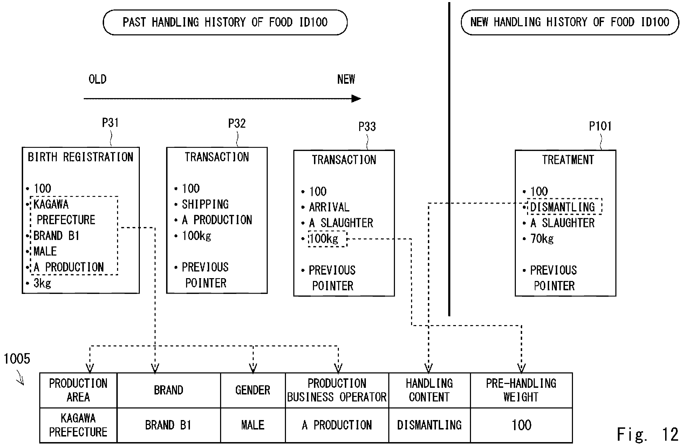

The internal process of the explanatory variable collection unit 141 will be described with reference to Fig. 12. Fig. 12 is a diagram for describing a method of generating collection data 1005 from a handling history. As an example, it is assumed that handling histories P31, P32, and P33 are stored in the handling history storage unit 17. Each of handling histories P31, P32, and P33 indicates a handling history of a product with food ID "100".

First, the explanatory variable collection unit 141 acquires the handling histories P31, P32, and P33 related to the product with the food ID "100" from the handling history storage unit 17. Next, the explanatory variable collection unit 141 acquires the production area, the brand, the gender, and the like from the handling history P31 of the birth registration. The explanatory variable collection unit 141 acquires the handling content "dismantling" from the new handling history P101.

The explanatory variable collection unit 141 refers to the handling history P33 added last among the handling histories acquired from the handling history storage unit 17. The explanatory variable collection unit 141 acquires the weight "100 kg" of the handling history P33 as the pre-handling weight of the handling history P101. In this way, the explanatory variable collection unit 141 collects data from the handling history storage unit 17 and acquires the collection data 1005.

The explanatory variable collection unit 141 transmits the collection data 1005 to the food feature vector generation unit 142. The explanatory variable collection unit 141 transmits the handling history P101 to the prediction error threshold value determination unit 144.

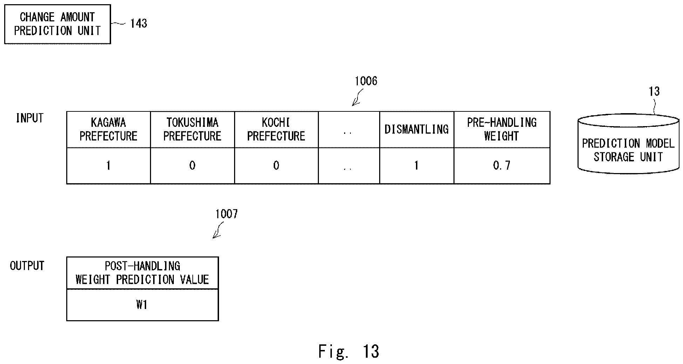

The internal process of the change amount prediction unit 143 will be described with reference to Fig. 13. Fig. 13 is a diagram illustrating input/output data in the change amount prediction unit 143.

The change amount prediction unit 143 is an example of the prediction unit 102 described above. Based on the target product handling history, the change amount prediction unit 143 predicts the post-handling weight for the handling included in the target product handling history using the change amount prediction model, and calculates the target product prediction weight. The change amount prediction model is trained using, as training data, production information related to production of a product, handling content information indicating handling content of the product, and weight information indicating the pre- and post- handling weights of the product.

Specifically, when receiving a food feature vector 1006 from food feature vector generation unit 112, change amount prediction unit 143 first acquires a change amount prediction model from prediction model storage unit 13. Next, the change amount prediction unit 143 calculates a prediction value 1007 of the post-handling weight using the acquired change amount prediction model and the food feature vector 1006. In the example of the drawing, the weight W1 is illustrated as the prediction value 1007. The change amount prediction unit 143 transmits the prediction value 1007 of the post-handling weight to the prediction error threshold value determination unit 144.

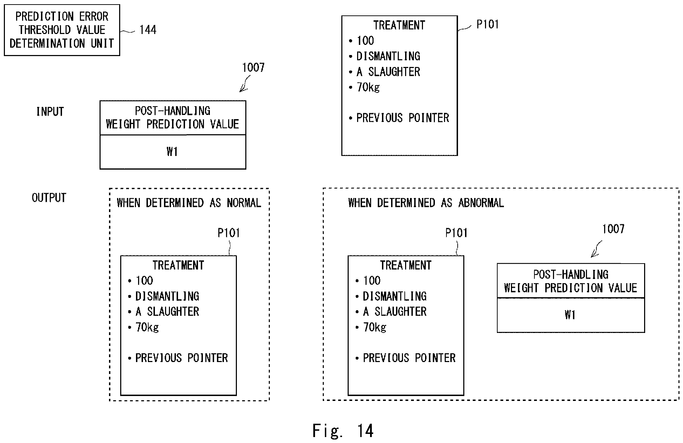

The internal process of the prediction error threshold value determination unit 144 will be described with reference to Fig. 14. Fig. 14 is a diagram illustrating input/output data in the prediction error threshold value determination unit 144.

The prediction error threshold value determination unit 144 is an example of the abnormality determination unit 103 described above. The prediction error threshold value determination unit 144 determines whether there is an abnormality in the weight change indicated by the target product handling history based on the difference between the post-handling weight of the target product in the target product handling history and the target product prediction weight calculated by the prediction unit. The prediction error threshold value determination unit 144 determines that the weight change indicated by the target product handling history is normal in a case where the difference is less than the threshold value, and determines that the weight change is abnormal in a case where the difference is equal to or more than the threshold value.

Specifically, first, the prediction error threshold value determination unit 144 receives the prediction value 1007 of the post-handling weight from the change amount prediction unit 143. The prediction error threshold value determination unit 144 receives the new handling history P101 from the explanatory variable collection unit 141. Next, the prediction error threshold value determination unit 144 calculates a difference (prediction error) between the input value of the post-handling weight acquired from the handling history P101 and the prediction value 1007.

The "input value" indicates a post-handling weight in the handling indicated by the handling history P101. In the example of the figure, the input value is "70 kg". Therefore, the prediction error threshold value determination unit 144 calculates the difference between "70 kg" of the input value and "W1" of the prediction value 1007 as the prediction error.

The prediction error threshold value determination unit 144 compares the prediction error with a predetermined threshold value to determine whether the weight change indicated by the handling history P101 is normal or abnormal. The threshold value can be set in advance by an administrator or the like of the system. The threshold value may be fixed or may be changed as appropriate.

The prediction error threshold value determination unit 144 outputs different information between the case where the determination result is normal and the case where the determination result is abnormal as illustrated on the left and right of the lower part of Fig. 14. In a case where the prediction error is less than the threshold value, the prediction error threshold value determination unit 144 determines that the handling history P101 is normal. In this case, the prediction error threshold value determination unit 144 transmits the handling history P101 to the handling history distribution management unit 16, and ends the process.

In a case where the prediction error is equal to or more than the threshold value, the prediction error threshold value determination unit 144 determines that the weight change indicated by the handling history P101 is abnormal. In this case, the prediction error threshold value determination unit 144 notifies the user of the prediction value 1007 in addition to the handling history P101, and ends the process. The user is, for example, a person in charge of audit. In this way, the person in charge of audit can compare the weight stored in the handling history storage unit 17 with the weight predicted using the change amount prediction model. Therefore, the person in charge of audit can quickly grasp not only that an abnormality has been detected in the weight change in the handling history but also the details of the abnormality.

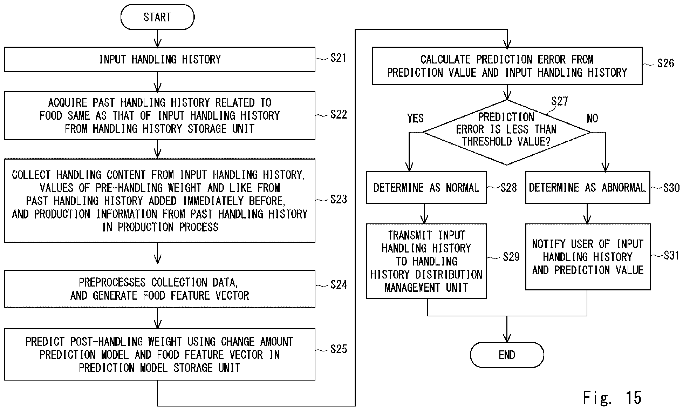

Next, the process by the abnormality detection unit 14 will be described with reference to Fig. 15. Fig. 15 is a flowchart illustrating the process performed by the abnormality detection unit 14 (see Fig. 10).

First, the explanatory variable collection unit 141 receives the handling history from the handling history creation unit 15 (S21). The input handling history indicates the handling history to be audited.

Next, the explanatory variable collection unit 141 acquires a past handling history related to the food same as that of the input handling history from the handling history storage unit 17 (S22).

Subsequently, the explanatory variable collection unit 141 collects the handling content from the input handling history, the values of the pre-handling weight and the like from the past handling history added immediately before, and the production information from the past handling history in the production process (S23).

Subsequently, food feature vector generation unit 142 preprocesses the collection data to generate a food feature vector (S24). The change amount prediction unit 143 predicts the post-handling weight using the change amount prediction model and the food feature vector stored in the prediction model storage unit 13 (S25).

Subsequently, the prediction error threshold value determination unit 144 calculates a prediction error from the prediction value and the input handling history (S26). The prediction error threshold value determination unit 144 determines whether the prediction error is less than the threshold value (S27).

In a case where the prediction error is less than the threshold value (YES in S27), the prediction error threshold value determination unit 144 determines that the weight change indicated by the input handling history is normal (S28). In this case, the prediction error threshold value determination unit 144 transmits the input handling history to the handling history distribution management unit 16 (S29). In a case where the prediction error is not less than the threshold value (NO in S27), the prediction error threshold value determination unit 144 determines that the weight change indicated by the input handling history is abnormal (S30). In this case, the prediction error threshold value determination unit 144 notifies the user of the input handling history and prediction value (S31).

As described above, the information processing system 10 predicts the post-handling weight for the handling included in the target product handling history using the prediction model trained using the production information, the handling content information, and the weight information as the training data to calculate the target product prediction weight. The information processing system 10 determines whether there is an abnormality in the weight change indicated by the target product handling history based on the difference between the post-handling weight of the target product in the target product handling history and the target product prediction weight calculated by the prediction unit. In this way, the information processing system 10 can appropriately detect the abnormality included in the handling history of the product.

(Third example embodiment)

Next, the third example embodiment will be described. The third example embodiment is a modified example of the second example embodiment. The information processing system 10 described above detects an abnormality included in the handling history based on a change in weight or the like before and after handling the product. An information processing system 10a according to the present disclosure enables coping with the falsification of qualitative data such as a production area in addition to a change in weight or the like. As in the second example embodiment, the present example embodiment will be described using the weight of the product as an example of the amount of the product. Hereinafter, portions different from the above-described information processing system will be mainly described, and description of overlapping portions will be appropriately omitted. The same applies to the following example embodiments.

(Configuration of information processing system 10a)

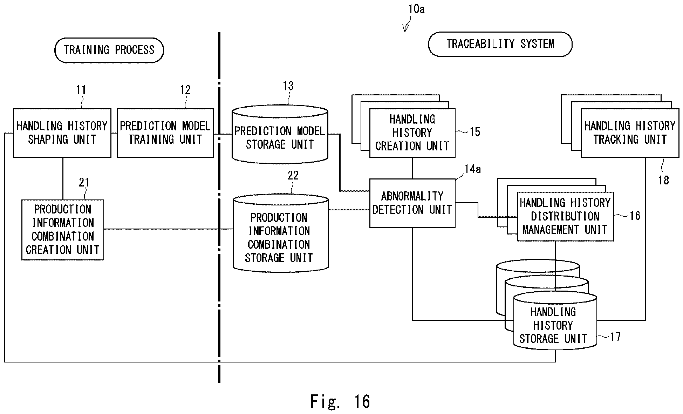

First, the information processing system 10a will be described with reference to Fig. 16. Fig. 16 is a block diagram illustrating a configuration of the information processing system 10a. The information processing system 10a includes a production information combination creation unit 21 and a production information combination storage unit 22 in addition to the configuration of the information processing system 10 (see Fig. 3) described above.

An abnormality detection unit 14a has a configuration different from that of the abnormality detection unit 14 described above. Specifically, the abnormality detection unit 14a generates verification data including a pre-handling weight of the target product, handling information about the target product, and possible combinations of the production information, and detects an abnormality using the verification data.

In addition, the abnormality detection unit 14a calculates a prediction value of a post-handling weight related to each of the plurality of pieces of verification data as a verification prediction weight using the change amount prediction model. The abnormality detection unit 14a determines that the weight change indicated by the target product handling history is normal in a case where the target product prediction weight is close to the post-handling weight in the target product handling history among the target product prediction weight and the plurality of verification prediction weights, and determines that the weight change indicated by the target product handling history is abnormal otherwise.

For example, the abnormality detection unit 14a calculates a difference (referred to as a "first prediction error") between the target product prediction weight and the post-handling weight in the target product handling history. The first prediction error is a prediction error calculated using the collection data. The abnormality detection unit 14a calculates a difference (referred to as a "second prediction error") between the plurality of verification prediction weights and the post-handling weight in the target product handling history. The second prediction error is a prediction error calculated using the verification data. The abnormality detection unit 14a calculates a plurality of second prediction errors related to the plurality of verification prediction weights.

The abnormality detection unit 14a arranges the first prediction error and the plurality of second prediction errors in ascending order of values. The abnormality detection unit 14a identifies an order of the first prediction error in the whole (the first prediction error and the plurality of second prediction errors). For example, the abnormality detection unit 14a determines that the weight change is normal in a case where the order of the first prediction error is higher than the predetermined order, and determines that the weight change is abnormal otherwise.

Alternatively, the abnormality detection unit 14a may determine that the weight change is normal in a case where the order of the first prediction error is the highest, and may determine that the weight change is abnormal otherwise. In other words, in this case, the abnormality detection unit 14a determines that the weight change is normal in a case where the target product prediction weight is closest to the post-handling weight in the target product handling history, and determines that the weight change is abnormal otherwise. In the present example embodiment, description will be made mainly using this determination method.

When determining that the weight change indicated by the target product handling history is abnormal, the abnormality detection unit 14a identifies verification data indicating a verification prediction weight closest to the post-handling weight in the target product handling history from the plurality of pieces of verification data, and notifies the user of information about the verification data. Hereinafter, these processes will be specifically described.

The production information combination creation unit 21 creates possible combinations of the production information (for example, a production area, a brand, and a production business operator) based on the change amount training data. The abnormality detection unit 14 creates verification data to which a combination of the production information is applied and identifies the production information with the smallest prediction error (matching) to detect the abnormality of the weight change indicated by the handling history.

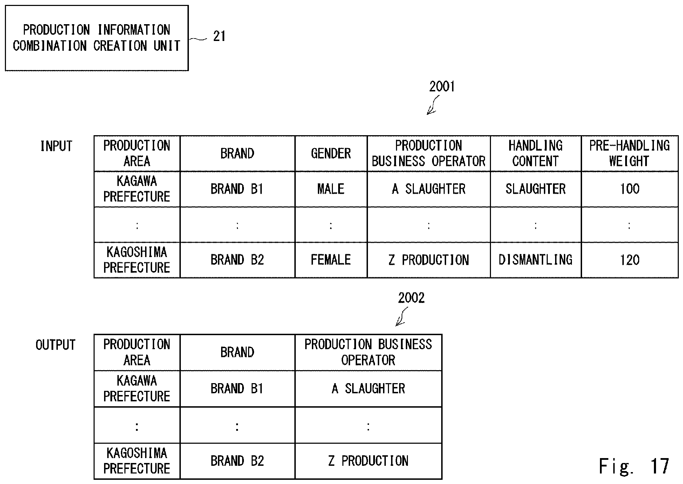

The internal process of the production information combination creation unit 21 will be described with reference to Fig. 17. Fig. 17 is a diagram illustrating input/output data in the production information combination creation unit 21. First, the production information combination creation unit 21 receives explanatory variable 2001 from the change amount training data generation unit 111. Next, the production information combination creation unit 21 collects possible combinations of the production area, the brand, and the production business operator included in the explanatory variable 2001. The production information combination creation unit 21 transmits a combination 2002 of the production information to the production information combination storage unit 22.

The possible combination of the production information created by the production information combination creation unit 21 will be specifically described. In the example of the drawing, an example of a combinations of three of the production area, the brand, and the production business operator is illustrated, but a description will be given using a combination of two of the production area and the brand.

For example, as an example of a possible combination of the production area and the brand, there is a combination of the production area "Kagawa prefecture" and the brand "Sanuki cow" (registered trademark). In this manner, the production information combination creation unit 21 creates possible combinations of production information, such as a production area and a brand related to the production area. In addition, the production information combination creation unit 21 collects such combinations. On the other hand, for example, the production area and the brand is not related to each other between the production area "Kagawa prefecture" and the brand "Matsuzaka cow" (registered trademark). The production information combination creation unit 21 does not create a combination of the production information in which the related relationship is inconsistent as described above.

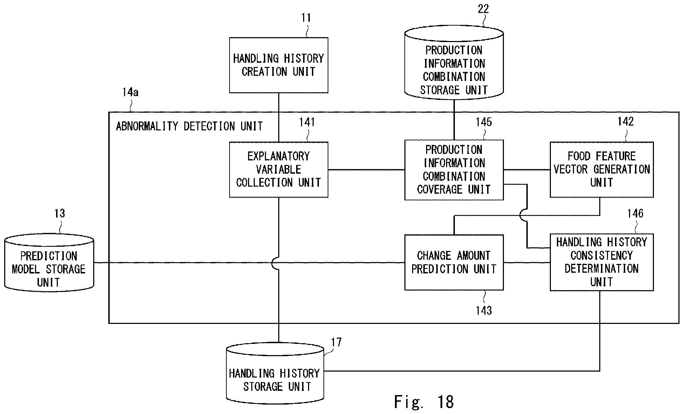

The configuration of the abnormality detection unit 14a will be described with reference to Fig. 18. Fig. 18 is a block diagram illustrating a configuration of the abnormality detection unit 14a. The abnormality detection unit 14a includes a production information combination coverage unit 145 and a handling history consistency determination unit 146 in addition to the configuration of the abnormality detection unit 14 described above.

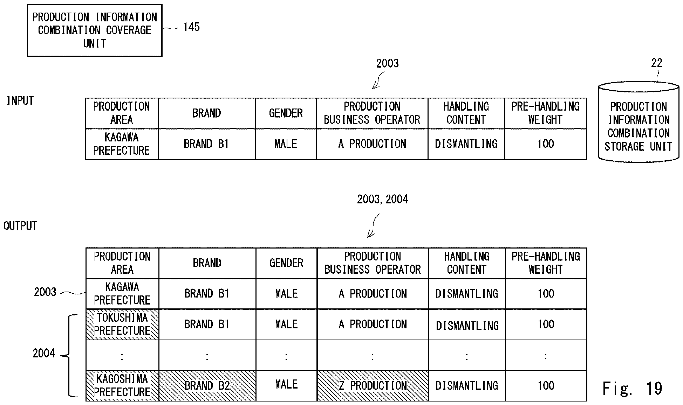

The internal process of the production information combination coverage unit 145 will be described with reference to Fig. 19. Fig. 19 is a diagram illustrating input/output data in the production information combination coverage unit 145. First, when receiving collection data 2003 from the explanatory variable collection unit 141, the production information combination coverage unit 145 acquires a combination of the production information from the production information combination storage unit 22.

Next, the production information combination coverage unit 145 generates verification data 2004 based on the combination of the production information acquired from the production information combination storage unit 22. The production information combination coverage unit 145 generates verification data 2004 in which all combinations for the production information are included. For example, in the example of the drawing, a production area, a brand, a gender, and a production business operator are illustrated as the production information. The production information combination coverage unit 145 generates verification data 2004 including the pre-handling weight of the target product, the handling content of the target product, and possible combinations of production information. As a result, the production information combination coverage unit 145 can generate the verification data 2004 covering combinations of information included in the production information.

The pre-handling weight, which is quantitative data, is fixed. For example, in the example of the figure, the production information combination coverage unit 145 fixes the pre-handling weight to "100 kg" and generates the verification data 2004.

The production information combination coverage unit 145 may generate the verification data 2004 using not only all combinations but also a smaller number of combinations than all combinations. The production information combination coverage unit 145 transmits the collection data 2003 and the verification data 2004 to the food feature vector generation unit 142. The production information combination coverage unit 145 also transmits the collection data 2003 and the verification data 2004 to the handling history consistency determination unit 146.

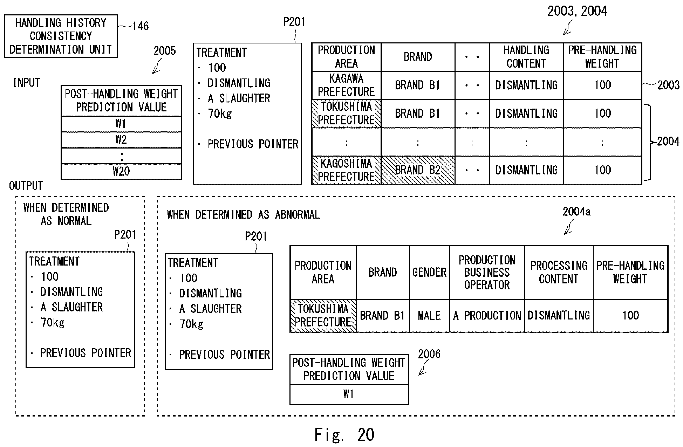

The handling history consistency determination unit 146 will be described with reference to Fig. 20. Fig. 20 is a diagram illustrating input/output data in the handling history consistency determination unit 146. First, the handling history consistency determination unit 146 receives a list 2005 of prediction values of the post-handling weights from the change amount prediction unit 143. The list 2005 is a prediction value of the post-handling weight related to each of all combinations in the verification data. In the example of the figure, the list 2005 includes W1, W2, ..., and W20.

The handling history consistency determination unit 146 receives a new handling history P201 from the explanatory variable collection unit 141. Further, the handling history consistency determination unit 146 receives the collection data 2003 and the verification data 2004 from the production information combination coverage unit 145.

Next, the handling history consistency determination unit 146 calculates an input value of the post-handling weight acquired from the handling history P201 and a difference (prediction error) with the prediction value. In a case where the prediction error in the collection data 2003 generated by the explanatory variable collection unit 141 is minimum, the handling history consistency determination unit 146 determines that the weight change indicated by the handling history P201 is normal. In this case, the handling history consistency determination unit 146 transmits the handling history P201 to the handling history distribution management unit 16, and ends the process.

In a case where the prediction error in the collection data 2003 is not the minimum, the handling history consistency determination unit 146 determines that the weight change indicated by the handling history P101 is abnormal. In this case, the handling history consistency determination unit 146 identifies a verification data 2004a having the smallest prediction error among the verification data 2004 generated by the production information combination coverage unit 145. As a result, in a case where the production information or the handling content included in the handling history P201 is falsified, the handling history consistency determination unit 146 can identify information assumed to be true production information or information assumed to be true handling content.

For example, in the example of Fig. 20, the handling history consistency determination unit 146 identifies data in which the production area is "Tokushima prefecture" as the verification data 2004a having the smallest prediction error. In this case, it is assumed that there is a high possibility that a product registered as a product produced in "Kagawa prefecture" is actually produced in "Tokushima prefecture".

The handling history consistency determination unit 146 notifies the user of the handling history P201, the verification data 2004a having the smallest prediction error, and a prediction value 2006 in the collection data 2003. The user is, for example, a person in charge of audit. In this way, the person in charge of audit can grasp the true production information and the like and the post-handling weight related to the collection data 2003 in addition to the fact that the weight change indicated by the handling history is abnormal. Upon transmitting these pieces of data, the handling history consistency determination unit 146 ends the process.

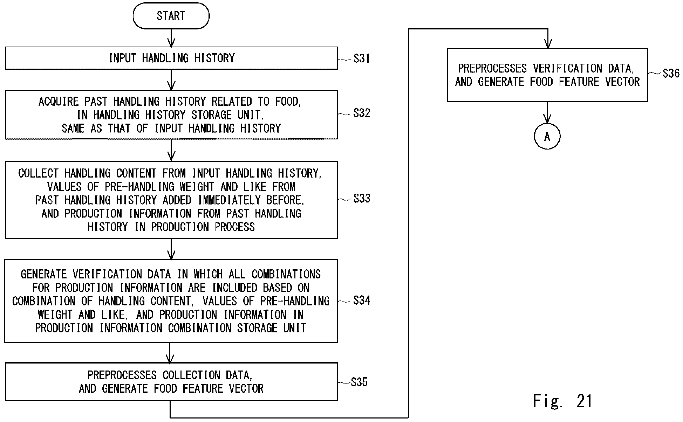

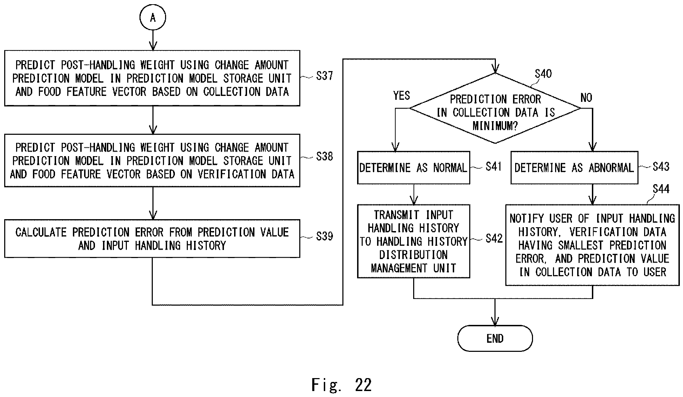

The process performed by the abnormality detection unit 14a will be described with reference to Figs. 21 and 22. Figs. 21 and 22 are flowcharts illustrating the process performed by the abnormality detection unit 14a.

First, the explanatory variable collection unit 141 (see Fig. 18) receives a handling history (S31). Next, the explanatory variable collection unit 141 acquires the past handling history related to the food, in the handling history storage unit 17, same as that of the input handling history (S32).

Subsequently, the explanatory variable collection unit 141 collects the handling content from the input handling history, the values of the pre-handling weight and the like from the past handling history added immediately before, and the production information from the past handling history in the production process (S33).

Subsequently, the production information combination coverage unit 145 generates verification data in which all combinations for the production information are included based on the handling content, the values of the pre-handling weight and the like, and the combination of the production information in the production information combination storage unit 22 (S34). The food feature vector generation unit 142 preprocesses the collection data to generate a food feature vector (S35). The food feature vector generation unit 142 preprocesses the verification data to generate a food feature vector (S36).

Moving to Fig. 22, the description will be continued. The change amount prediction unit 143 predicts the post-handling weight using the change amount prediction model in the prediction model storage unit 13 and the food feature vector based on the collection data (S37). The change amount prediction unit 143 predicts the post-handling weight using the change amount prediction model in the prediction model storage unit 13 and the food feature vector based on the verification data (S38). The handling history consistency determination unit 146 calculates a prediction error from the prediction value and the input handling history (S39).

Subsequently, the handling history consistency determination unit 146 determines whether the prediction error in the collection data is minimum (S40). In a case where it is determined that the prediction error is minimum (YES in S40), the handling history consistency determination unit 146 determines that the weight change indicated by the handling history is normal (S41). In this case, the handling history consistency determination unit 146 transmits the input handling history to the handling history distribution management unit 16 (S42).

In a case where it is determined that the prediction error in the collection data is not the minimum (NO in S40), the handling history consistency determination unit 146 determines that the weight change indicated by the handling history is abnormal (S43). In this case, the handling history consistency determination unit 146 notifies the user of the input handling history, the verification data having the smallest prediction error, and the prediction value in the collection data (S44).

As described above, in the information processing system 10a, the abnormality detection unit 14a generates the verification data based on the combination of the handling content included in the collection data, the pre-handling weight, and the production information.

The abnormality detection unit 14a predicts a post-handling weight related to the collection data and a post-handling weight related to the verification data using the change amount prediction model. The abnormality detection unit 14a determines whether the weight change indicated by the handling history is normal or abnormal based on the prediction error between the input value and the prediction value using the prediction result. In a case where it is determined that the weight change indicated by the target product handling history is abnormal, the target product may be falsified. The abnormality detection unit 14a identifies information assumed to be true production information or information assumed to be true handling content of a target product using verification data having the smallest prediction error.

In this way, the information processing system 10a can appropriately detect the abnormality included in the handling history of the product, so that the falsification of the production information can be appropriately detected. Furthermore, information about true production information and the like can be provided to the user.

<Fourth example embodiment>

Next, the fourth example embodiment will be described. The fourth example embodiment is a modified example of the third example embodiment. In the third example embodiment, it is possible to cope with the falsification of qualitative data such as a production area in addition to a change in weight or the like. An information processing system 10b according to the present disclosure enables coping with new production information such as addition of a new type. As in the second example embodiment, the present example embodiment will be described using the weight of the product as an example of the amount of the product.

(Configuration of information processing system 10b)

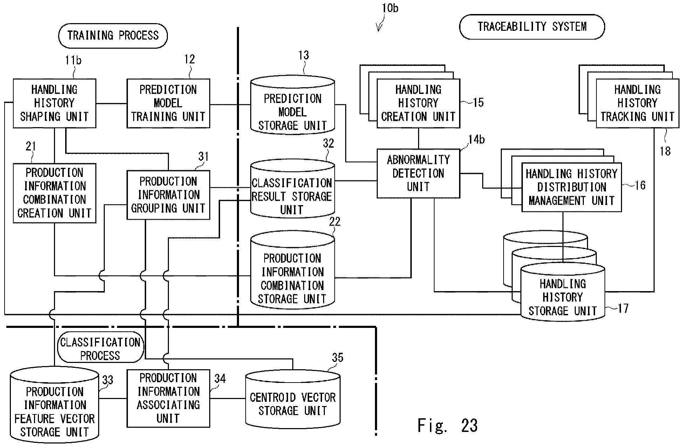

The information processing system 10b will be described with reference to Fig. 23. Fig. 23 is a block diagram illustrating a configuration of the information processing system 10b.

The information processing system 10b has a classification processing function in addition to the configuration of the information processing system 10a (see Fig. 16) described above. As a result, in the information processing system 10b, the change amount prediction model is trained using the training data grouped based on the feature information indicating the feature of the production information. In this way, the information processing system 10b can group production areas, brands, and production business operators into similar ones, and can generate a change amount prediction model trained on a change tendency of the values of the pre- and post- handling weights or the like for each group.

Using the classification processing function, the information processing system 10b groups the feature vectors related to the production information based on the similarity between the vectors and allocates a group ID for each group. In a case where a new production area, brand, or production business operator is added after the change amount prediction model is generated, the information processing system 10b calculates the distance between the feature vector and the centroid vector of each group, and associates the distance with the group ID of the group having the shortest distance.

The information processing system 10b includes a production information feature vector storage unit 33, a production information associating unit 34, and a centroid vector storage unit 35 related to the classification processing function. In association with this, the information processing system 10b includes a production information grouping unit 31 as part of the training processing function. Further, the information processing system 10b includes a classification result storage unit 32 as part of the traceability system function. A handling history shaping unit 11b and an abnormality detection unit 14b each have a configuration different from the configuration exemplified in the third example embodiment. The abnormality detection unit 14b identifies a group to which production information related to the target product handling history belongs, and detects an abnormality based on the identified group.

For the sake of explanation, the information processing system 10b has a configuration in which these functional units are added to the information processing system 10a, but the configuration of the information processing system 10b can be appropriately changed. For example, the information processing system 10b may not include the production information combination creation unit 21.

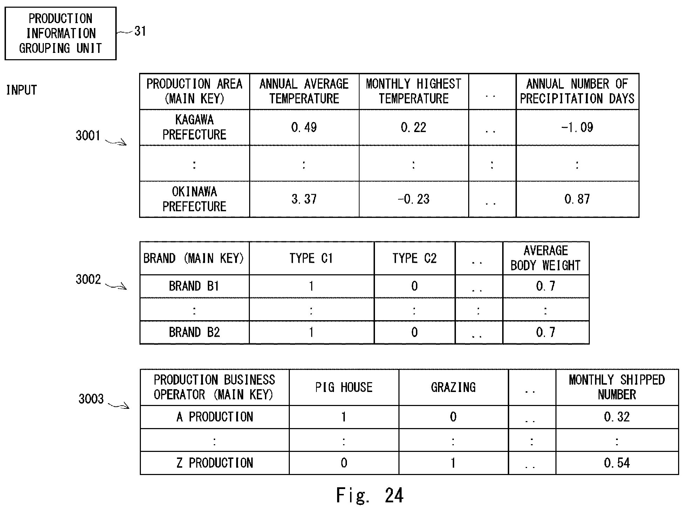

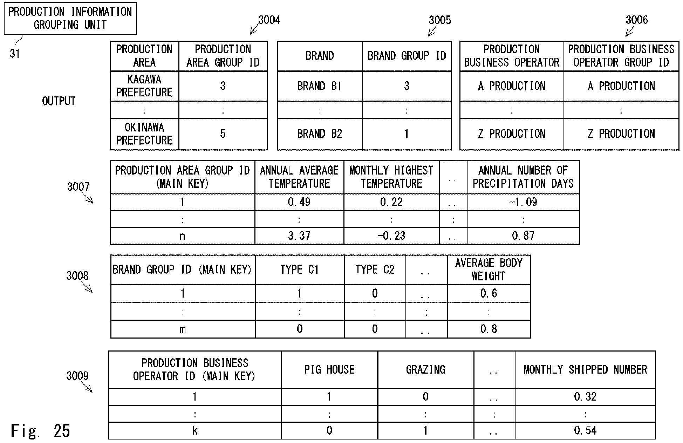

The internal process of the production information grouping unit 31 will be described with reference to Figs. 24 and 25. Fig. 24 is a diagram illustrating input data in the production information grouping unit 31. Fig. 25 is a diagram illustrating output data in the production information grouping unit 31.

First, the input to the production information grouping unit 31 will be described with reference to Fig. 24. The production information grouping unit 31 acquires a production area feature vector 3001, a brand feature vector 3002, and a production business operator feature vector 3003 from the production information feature vector storage unit 33. The feature vector 3001 to 3003 is information indicating a feature of each piece of production information. For example, the production area feature vector 3001 indicates each of the annual average temperature, the monthly highest temperature, and the annual number of precipitation days indicating the features of the production area. As illustrated in the figure, since the feature vectors 3001 to 3003 are an example, each of the feature vectors may include other information.

Next, the production information grouping unit 31 groups the production area feature vectors 3001 based on the similarity between the production area feature vectors, and allocates the production area group ID to each group. Similarly, the production information grouping unit 31 groups the brand feature vectors 3002 based on the similarity between the brand feature vectors, and allocates the brand group ID to each group. The production information grouping unit 31 groups the production business operator feature vectors 3003 based on the similarity between the production business operator feature vectors, and allocates the production business operator group ID to each group.

Next, the output from the production information grouping unit 31 will be described with reference to Fig. 25. The production information grouping unit 31 stores a set 3004 of the production area and the production area group ID, a set 3005 of the brand and the brand group ID, and a set 3006 of the production business operator and the production business operator group ID in the classification result storage unit 32 to transmit them to the handling history shaping unit 11b.

Next, the production information grouping unit 31 stores a set 3007 of the production area group ID and the centroid vector of the production area group, a set 3008 of the brand group ID and the centroid vector of the brand group, and a set 3009 of the production business operator group ID and the centroid vector of the production business operator group in the centroid vector storage unit 35. The production information grouping unit 31 can calculate a centroid vector using an average value, a median value, or the like of each feature vector.

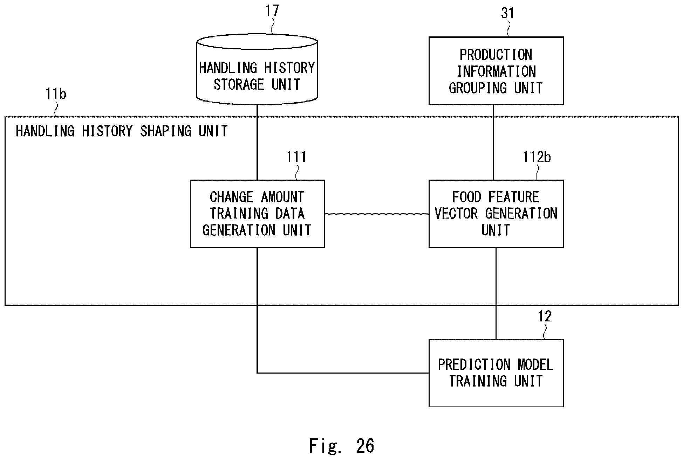

Next, the handling history shaping unit 11b will be described with reference to Fig. 26. Fig. 26 is a block diagram illustrating a configuration of the handling history shaping unit 11b. The handling history shaping unit 11b includes the change amount training data generation unit 111 and a food feature vector generation unit 112b.

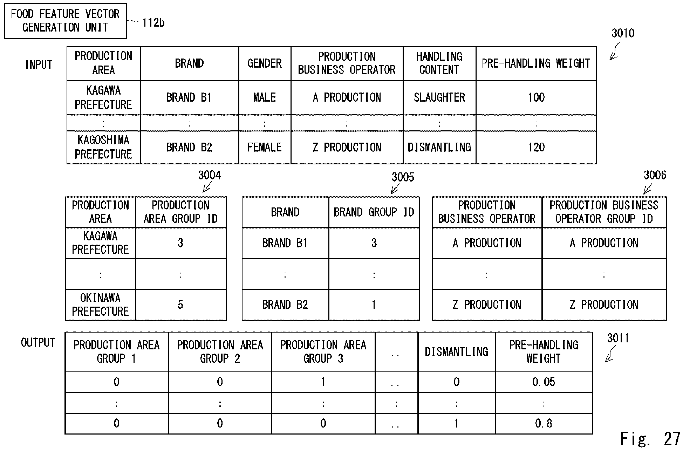

The internal process of the food feature vector generation unit 112b will be described with reference to Fig. 27. Fig. 27 is a diagram illustrating input/output data in the food feature vector generation unit 112b.

First, when receiving an explanatory variable 3010 from the change amount training data generation unit 111, the food feature vector generation unit 112b acquires the set 3004 of the production area and the production area group ID, the set 3005 of the brand and the brand group ID, and the set 3006 of the production business operator and the production business operator group ID from the production information grouping unit 31.

Next, the food feature vector generation unit 112b replaces the values of the production area, the brand, and the production business operator included in the explanatory variable 3010 with the production area group ID, the brand group ID, and the production business operator group ID to which each belongs.

Subsequently, food feature vector generation unit 112b performs preprocessing such as one-hot encoding on the qualitative variable included in explanatory variable 3010. The food feature vector generation unit 112b performs preprocessing such as standardization on the quantitative variable included in the explanatory variable 3010. The food feature vector generation unit 112b transmits a food feature vector 3011 generated by the preprocessing to the prediction model training unit 12.

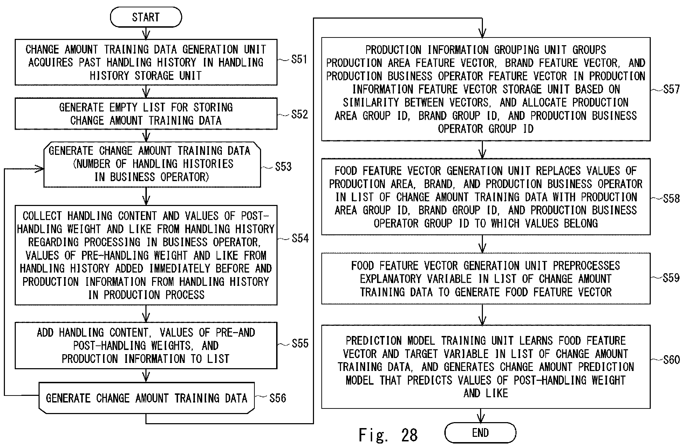

Subsequently, the process performed by the information processing system 10b will be described with reference to Fig. 28. Fig. 28 is a flowchart illustrating a process performed by the information processing system 10b.

First, the change amount training data generation unit 111 acquires the past handling history in the handling history storage unit 17 (S51). The change amount training data generation unit 111 generates an empty list for storing the change amount training data (S52). The change amount training data generation unit 111 generates change amount training data (S53). The change amount training data generation unit 111 can generate the number of pieces of change amount training data related to the number of handling histories in the business operator.

Subsequently, the change amount training data generation unit 111 collects the handling content and the values of the post-handling weight and the like from the handling history regarding the process in the business operator, the values of the pre-handling weight and the like from the handling history added immediately before the handling history regarding the process in the business operator, and the production information from the handling history in the production process (S54). The change amount training data generation unit 111 adds the handling content, the values of the pre- and post-handling weights or the like, and the production information to the list (S55). The change amount training data generation unit 111 returns the process to step S53 and repeats generation of the change amount training data (S56).

Subsequently, the production information grouping unit 31 groups the production area feature vector, the brand feature vector, and the production business operator feature vector in the production information feature vector storage unit 33 based on the similarity between the vectors, and allocates the production area group ID, the brand group ID, and the production business operator group ID to the respective feature vectors (S57). The food feature vector generation unit 112 replaces the values of the production area, the brand, and the production business operator in the list of the change amount training data with the production area group ID, the brand group ID, and the production business operator group ID to which each belongs (S58).

Subsequently, the food feature vector generation unit 112 preprocesses the explanatory variables in the list of the change amount training data to generate a food feature vector (S59). The prediction model training unit 12 learns the food feature vector and the target variable in the list of the change amount training data, and generates a change amount prediction model that predicts the values of the post-handling weight and the like (S60).

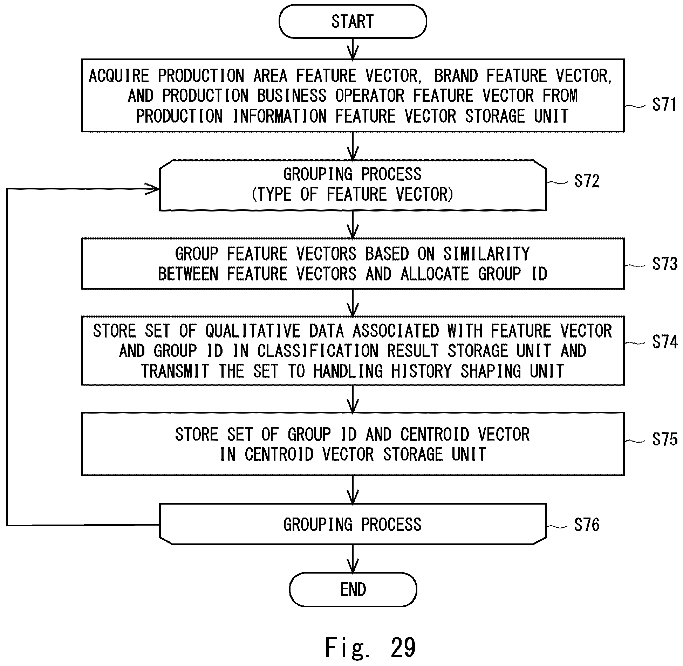

Next, the process performed by the production information grouping unit 31 will be described with reference to Fig. 29. Fig. 29 is a flowchart illustrating a process performed by the production information grouping unit 31.

First, the production information grouping unit 31 acquires a production area feature vector, a brand feature vector, and a production business operator feature vector from the production information feature vector storage unit 33 (S71). The production information grouping unit 31 performs a grouping process (S72). The production information grouping unit 31 can perform the grouping process using the number of groups related to the types of feature vectors.

Next, the production information grouping unit 31 groups the feature vectors based on the similarity between the feature vectors and allocates a group ID to the feature vector (S73). The production information grouping unit 31 stores a set of qualitative data associated with the feature vector and a group ID in the classification result storage unit 32 to transmit the set to the handling history shaping unit 11b (S74). The production information grouping unit 31 stores a set of the group ID and the centroid vector in the centroid vector storage unit 35 (S75). The production information grouping unit 31 returns the process to step S72 and repeats the grouping process (S76).

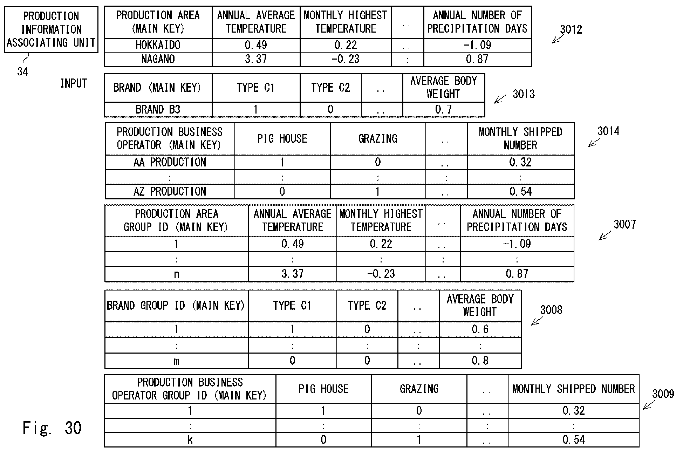

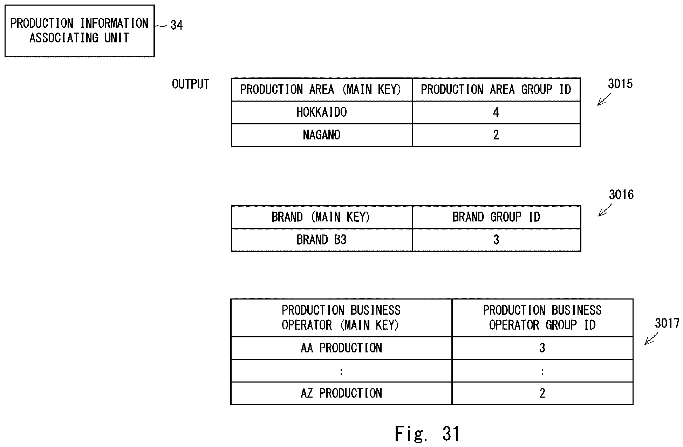

The internal process of the production information associating unit 34 will be described with reference to Figs. 30 and 31. Fig. 30 is a diagram illustrating input data in the production information associating unit 34. Fig. 31 is a diagram illustrating output data in the production information associating unit 34.

First, the input to the production information associating unit 34 will be described with reference to Fig. 30. The production information associating unit 34 acquires, from the production information feature vector storage unit 33, a production area feature vector 3012 related to a new production area, a brand feature vector 3013 related to a new brand, and a production business operator feature vector 3014 related to a new production business operator.

The production information associating unit 34 acquires a set 3007 of the production area group ID and the centroid vector, a set 3008 of the brand group ID and the centroid vector, and a set 3009 of the production business operator group ID and the centroid vector from the centroid vector storage unit 35.

Next, the output from the production information associating unit 34 will be described with reference to Fig. 31. The production information associating unit 34 calculates a distance between the production area feature vector 3012 related to the new production area and the centroid vector of the production area group. The production information associating unit 34 stores a set 3015 of the production area group ID of the production area group having the shortest distance and the new production area in the classification result storage unit 32.

Similarly, the production information associating unit 34 calculates a distance between the brand feature vector and the centroid vector of the brand group. The production information associating unit 34 stores a set 3016 of the brand group ID of the brand group having the shortest distance and the new brand in the classification result storage unit 32.

The production information associating unit 34 calculates a distance between the production business operator feature vector and the centroid vector of the production business operator group. The production information associating unit 34 stores a set 3017 of the production business operator group ID of the production business operator group having the shortest distance and the new production business operator in the classification result storage unit 32.

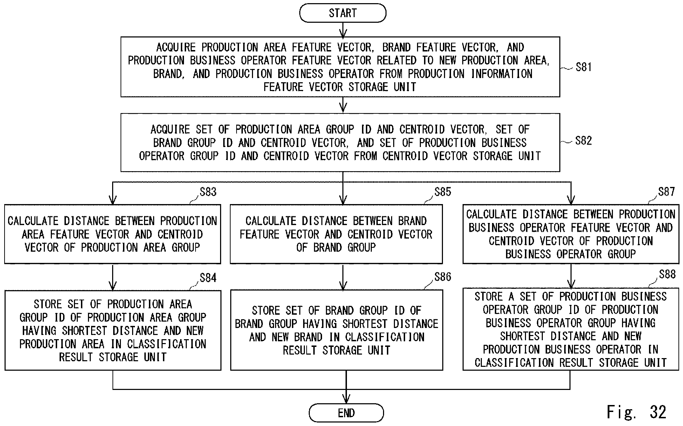

The classification process performed by the information processing system 10b will be described with reference to Fig. 32. Fig. 32 is a flowchart illustrating the classification process performed by the information processing system 10b.

The production information grouping unit 31 acquires a production area feature vector, a brand feature vector, and a production business operator feature vector related to a new production area, brand, and production business operator from the production information feature vector storage unit 33 (S81).

The production information grouping unit 31 acquires a set of the production area group ID and the centroid vector, a set of the brand group ID and the centroid vector, and a set of the production business operator group ID and the centroid vector from the centroid vector storage unit 35 (S82).

The production information grouping unit 31 calculates a distance between the production area feature vector and the centroid vector of the production area group (S83). The production information grouping unit 31 stores the set of the production area group ID of the production area group having the shortest distance and the new production area in the classification result storage unit 32 (S84).

The production information grouping unit 31 calculates a distance between the brand feature vector and the centroid vector of the brand group (S85). The production information grouping unit 31 stores a set of the brand group ID of the brand group having the shortest distance and the new brand in the classification result storage unit 32 (S86).

The production information grouping unit 31 calculates a distance between the production business operator feature vector and the centroid vector of the production business operator group (S87). The production information grouping unit 31 stores the set of the production business operator group ID of the production business operator group having the shortest distance and the new production business operator in the classification result storage unit 32 (S88).

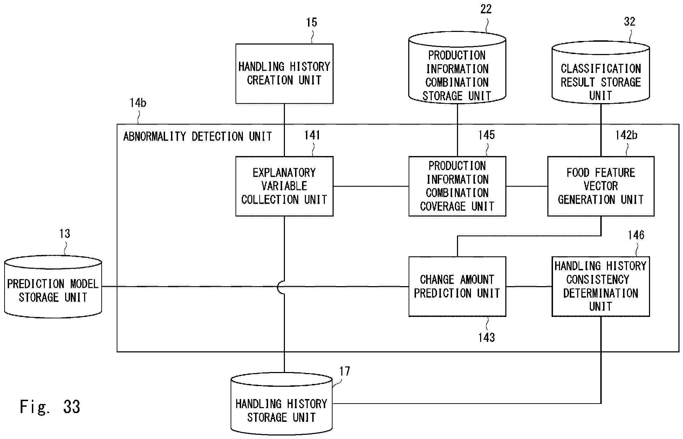

The configuration of the abnormality detection unit 14b will be described with reference to Fig. 33. Fig. 33 is a block diagram illustrating a configuration of the abnormality detection unit 14b. The abnormality detection unit 14b includes a food feature vector generation unit 142b instead of the food feature vector generation unit 142 of the abnormality detection unit 14a (see Fig. 18).

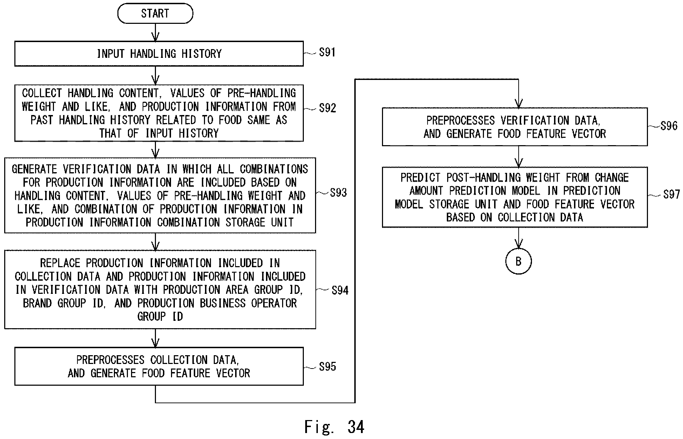

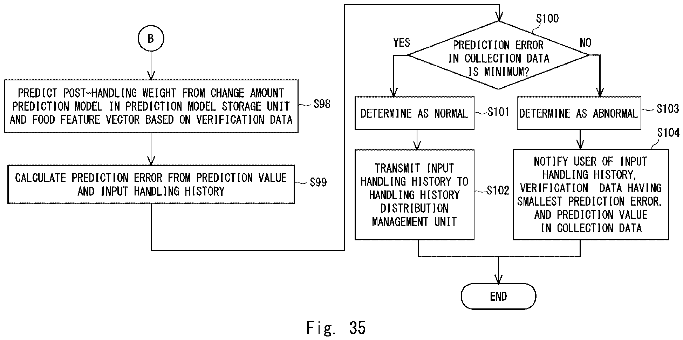

The process of the abnormality detection unit 14b will be described with reference to Figs. 34 and 35. Figs. 34 and 35 are flowcharts illustrating a process performed by the abnormality detection unit 14b.

First, the explanatory variable collection unit 141 (see Fig. 18) receives a handling history (S91). Next, the explanatory variable collection unit 141 refers to the handling history storage unit 17 and collects the handling content, the values of the pre-handling weight and the like, and the production information from the past handling history related to the food same as that of the input handling history (S92).

Subsequently, the explanatory variable collection unit 141 generates verification data in which all combinations for the production information are included way based on the combination of the handling content, the values of the pre-handling weight and the like, and the production information in the production information combination storage unit 22 (S93).

The food feature vector generation unit 142b replaces the production information included in the collection data and the production information included in the verification data with a production area group ID, a brand group ID, and a production business operator group ID (S94). The food feature vector generation unit 142b preprocesses the collection data to generate a food feature vector (S95). The food feature vector generation unit 142b preprocesses the verification data to generate a food feature vector (S96). The change amount prediction unit 143 predicts the post-handling weight from the change amount prediction model in the prediction model storage unit 13 and the food feature vector based on the collection data (S97).

Moving to Fig. 35, the description will be continued. The change amount prediction unit 143 predicts the post-handling weight from the change amount prediction model in the prediction model storage unit 13 and the food feature vector based on the verification data (S98). The handling history consistency determination unit 146 calculates a prediction error from the prediction value and the input handling history (S99).

Subsequently, the handling history consistency determination unit 146 determines whether the prediction error in the collection data is minimum (S100). In a case where it is determined that the prediction error is minimum (YES in S100), the handling history consistency determination unit 146 determines that the weight change indicated by the handling history is normal (S101). In this case, the handling history consistency determination unit 146 transmits the input handling history to the handling history distribution management unit 16 (S102).

In a case where it is determined that the prediction error in the collection data is not the minimum (NO in S100), the handling history consistency determination unit 146 determines that the weight change indicated by the handling history is abnormal (S103). In this case, the handling history consistency determination unit 146 notifies the user of the input handling history, the verification data having the smallest prediction error, and the prediction value in the collection data (S104).

As described above, the information processing system 10b has the classification processing function of performing grouping according to the feature of the production information. With this configuration, the information processing system 10b can accurately detect an abnormality even in a case where training cannot be performed using a sufficient amount of training data in a period immediately after introduction of the system, for example.

<Fifth example embodiment>

Next, the fifth example embodiment will be described. The fifth example embodiment is a modified example of the fourth example embodiment. In the fourth example embodiment, it is possible to cope with new production information such as addition of a new type. The information processing system 10c according to the present disclosure further enables easy analysis of data stored in a blockchain or the like.

(Configuration of information processing system 10c)

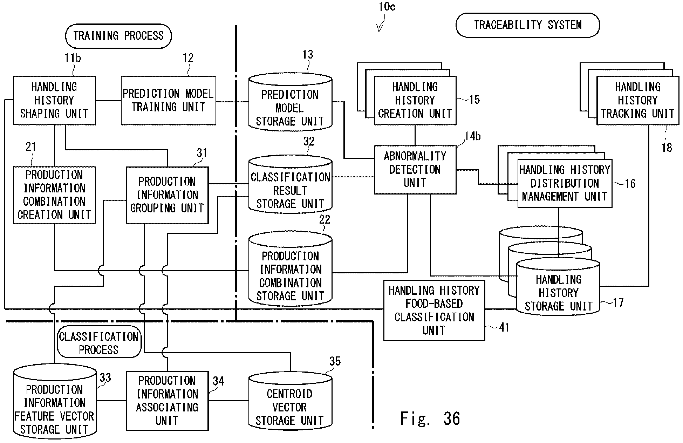

An information processing system 10c will be described with reference to Fig. 36. Fig. 36 is a block diagram illustrating a configuration of the information processing system 10c. The information processing system 10c further includes a handling history food-based classification unit 41 in addition to the configuration of the information processing system 10b (see Fig. 23) described above.

The handling history food-based classification unit 41 acquires time-series handling history information in which histories of handling of a plurality of products are stored in chronological order, and extracts a handling history for each product by performing the classification process on the time-series handling history information. The time-series handling history information is, for example, information in which handling histories of a plurality of products is stored in a blockchain. By performing the classification process, the handling history food-based classification unit 41 can classify the handling history stored in a state where the handling history can be traced only in chronological order into each food.

For the sake of explanation, an example in which the handling history food-based classification unit 41 is added to the information processing system 10b will be described, but the present invention is not limited thereto. For example, in any of the above-described first to fourth example embodiments, the configuration of the handling history food-based classification unit 41 can be added.

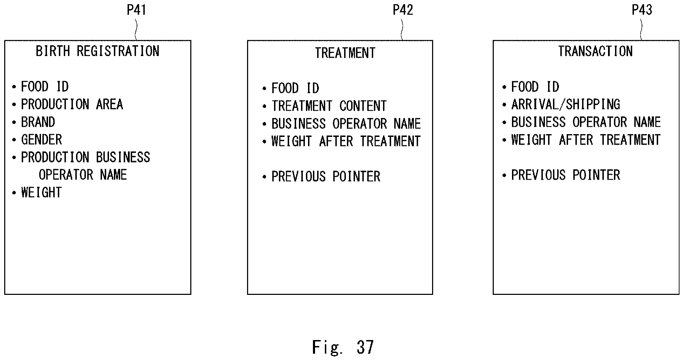

Characteristics of the handling history stored in the blockchain will be described with reference to Fig. 37. Fig. 37 is a diagram illustrating characteristics of a handling history stored in a blockchain. The handling history is stored in the handling history distribution management unit 16 and the handling history storage unit 17. It is assumed that the handling history distribution management unit 16 and the handling history storage unit 17 is configured by a blockchain. Therefore, it is assumed that the handling histories P41, P42, and P43 illustrated in the drawing are stored in the blockchain.

The handling history P41 indicates a handling history of a production process in the business operator. The handling history P42 indicates a handling history of treatment in the business operator. The handling history P43 indicates a handling history of a transaction between business operators.

The blockchain has an upper limit to the capacity that can be stored in one block. Therefore, it is necessary to reduce the data amount of the handling history stored in the blockchain to such an extent that the upper limit is not exceeded. Therefore, information necessary for analysis cannot be redundantly provided.

In the blockchain, a plurality of handling histories is stored in chronological order, and for example, it is difficult to extract only a product having a specific food ID as a target. For example, it is assumed that the handling histories P41 to P43 relate to one pig A managed with the same food ID. The handling histories P41 to P43 are stored in a row with the handling histories regarding other pigs B, C, ... managed by other food IDs. Therefore, it is difficult to extract only the information about the pig A from the blockchain.

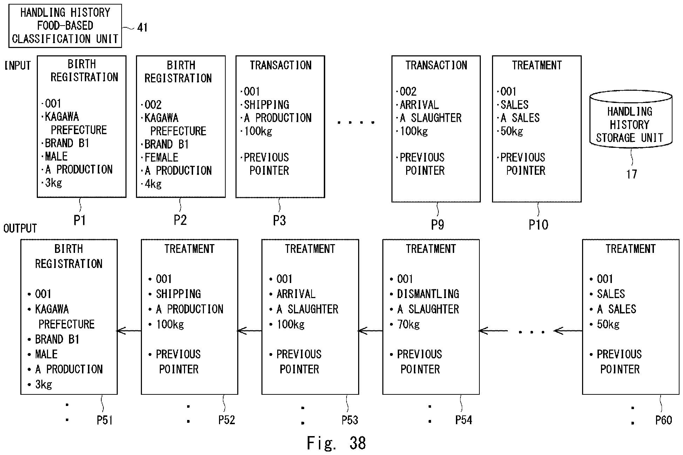

The internal process of the handling history food-based classification unit 41 will be described with reference to Fig. 38. Fig. 38 is a diagram illustrating input/output data in the handling history food-based classification unit 41.

First, the handling history food-based classification unit 41 acquires handling histories in chronological order from the handling history storage unit 17. For example, in the illustrated example, the handling history food-based classification unit 41 acquires the handling histories P1, P2, P3, ..., P9, and P10. In the handling histories P1, P2, P3, ..., P9, and P10, information about a product with a food ID of "001" and information about a product with a food ID of "002" are stored in a row.

The handling history food-based classification unit 41 performs classification in such a way that handling histories related to the same food are in the same list. In the illustrated example, the handling history food-based classification unit 41 performs classification in such a way as to extract only a handling history related to a product with a food ID of "001". The handling history food-based classification unit 41 transmits, to the handling history shaping unit 11b, lists P51, P52, P53, P54, ..., P60 of the handling histories classified by food.

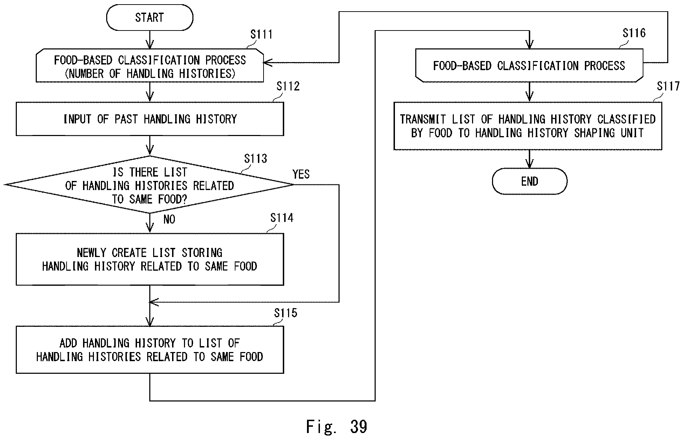

The process of the handling history food-based classification unit 41 will be described with reference to Fig. 39. Fig. 39 is a flowchart illustrating the process of the handling history food-based classification unit 41.

First, the handling history food-based classification unit 41 performs a food-based classification process (S111). The food classification by the handling history food-based classification unit 41 can perform the food-based classification process as many as the number of handling histories. Next, the handling history food-based classification unit 41 receives a past handling history (S112).

Subsequently, the handling history food-based classification unit 41 determines whether there is a list of handling histories related to the same food (S113). In a case where it is determined that there is a list of handling histories related to the same food (YES in S113), the handling history food-based classification unit 41 proceeds to the process of step S115. In a case where it is determined that there is no list of handling histories related to the same food (NO in S113), the handling history food-based classification unit 41 newly creates a list that stores handling histories related to the same food (S114).

Subsequently, the handling history food-based classification unit 41 adds the handling history to the list of the handling histories related to the same food (S115). The handling history food-based classification unit 41 returns the process to step S111 and repeats the food-based classification process (S116). The handling history food-based classification unit 41 transmits a list of handling histories classified by food to the handling history shaping unit 11b (S117).

As described above, in the information processing system 10c classifies a plurality of handling histories stored in a state where the handling histories can be traced only in chronological order for each product. In this way, the classification can be performed not only in time series but also for each product. Therefore, according to the information processing system 10c, it is possible to easily manage the information for each product while appropriately detecting the falsification of the product.

As a specific example of the first example embodiment, each of the information processing systems 10, 10a, 10b, and 10c (hereinafter referred to as the "information processing system 10 and the like") is described above. The configuration of the information processing system 10 and the like described above is merely an example, and can be changed as appropriate. For example, in a case where some or all of the components of the information processing system 10 and the like are achieved by a plurality of information processing devices, circuits, and the like, the plurality of information processing devices, circuits, and the like may be disposed in a centralized manner or in a distributed manner. For example, the information processing devices, the circuits, and the like may be implemented in the form of a client server system, a cloud computing system, or the like in which they are connected to each other through a communication network. The functions of the information processing system 10 and the like may be provided in a software as a service (SaaS) format.

The above-described example embodiments can be executed in any combination. For example, the second example embodiment and the third example embodiment may be combined. The second example embodiment and the fourth example embodiment may be combined. Further, the second, third, and fourth example embodiments may be combined. The fifth example embodiment may be combined with each of the second to fourth example embodiments.

<Hardware configuration example>

Each functional configuration unit of the information processing system 10 and the like may be achieved by hardware (for example, a hard-wired electronic circuit or the like) that achieves each functional configuration unit, or may be achieved by a combination of hardware and software (for example, a combination of an electronic circuit and a program for controlling the electronic circuit or the like). Hereinafter, a case where each functional configuration unit of the information processing system 10 and the like is achieved by a combination of hardware and software will be further described.

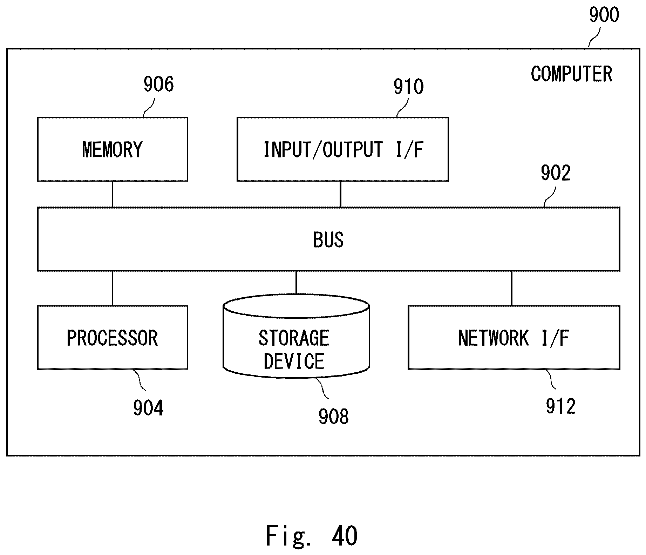

Fig. 40 is a block diagram illustrating a hardware configuration of a computer 900 that implements the information processing system 10 and the like. The computer 900 may be a dedicated computer designed to achieve the information processing system 10 and the like, or may be a general-purpose computer. The computer 900 may be a portable computer such as a smartphone or a tablet terminal.

For example, by installing a predetermined application in the computer 900, each function of the information processing system 10 and the like is achieved in the computer 900. The application is configured by a program for achieving each functional configuration unit of the information processing system 10 and the like.

The computer 900 includes a bus 902, a processor 904, a memory 906, a storage device 908, an input/output interface 910, and a network interface 912. The bus 902 is a data transmission path for the processor 904, the memory 906, the storage device 908, the input/output interface 910, and the network interface 912 to transmit and receive data to and from each other. However, a method of connecting the processor 904 and the like to each other is not limited to the bus connection.

The processor 904 is various processors such as a central processing unit (CPU), a graphics processing unit (GPU), a field-programmable gate array (FPGA), or a quantum processor (quantum computer control chip). The memory 906 is a main storage device achieved with use of a random access memory (RAM) or the like. The storage device 908 is an auxiliary storage device achieved by using a hard disk, a solid state drive (SSD), a memory card, a read only memory (ROM), or the like.

The input/output interface 910 is an interface that connects the computer 900 with the input to output device. For example, an input device such as a keyboard and an output device such as a display device are connected with the input/output interface 910.

The network interface 912 is an interface that connects the computer 900 to a network. The network may be a local area network (LAN) or a wide area network (WAN).

The storage device 908 stores a program for achieving each functional configuration unit of the information processing system 10 and the like (a program for achieving the above-described application). The processor 904 reads the program into the memory 906 and executes the program to implement each functional configuration unit of the information processing system 10 and the like.

Each of the processors executes one or more programs including instructions for causing a computer to perform an algorithm. This program includes a command group (or software code) for causing a computer to perform one or more functions described in the example embodiment when read by the computer. The program may be stored in various types of a non-transitory computer-readable medium or a tangible storage medium. Without being limited, but examples of the non-transitory computer-readable medium or the tangible storage medium include a random-access memory (RAM), a read-only memory (ROM), a flash memory, a solid-state drive (SSD) or any other memory technology, a CD-ROM, a digital versatile disc (DVD), a Blu-ray (registered trademark) disk or any other optical disk storage, a magnetic cassette, a magnetic tape, a magnetic disk storage, or any other magnetic storage device. The program may also be transmitted in various types of the transitory computer-readable medium or a communication medium. Without being limited, but examples of the transitory computer-readable medium or the communication medium include an electric signal, an optical signal, an acoustic signal, or any other form of propagation signal.

While the present disclosure has been particularly shown and described with reference to example embodiments thereof, the present disclosure is not limited to these example embodiments. It will be understood by those of ordinary skill in the art that various changes in form and details may be made therein without departing from the spirit and scope of the present disclosure as defined by the claims. And each embodiment can be appropriately combined with other embodiments.

For example, in the above example embodiments, the weight information indicating the weight of the product is used as the amount information, but as described above, other quantitative data may be used as the amount information. For example, information such as a volume, a length, or the number of products can be used as the amount of products used as the training data, the amount of products to be predicted, and the amount of products whose abnormality is to be detected.

Each of the drawings is merely an example to illustrate one or more example embodiments. Each of the drawings is not associated with only one specific example embodiment, but may be associated with one or more other example embodiments. As those of ordinary skill in the art will appreciate, various features or steps described with reference to any one of the figures may be combined with features or steps shown in one or more other figures, for example, to create example embodiments that are not explicitly shown or described. All of the features or steps shown in any one of the figures for describing exemplary example embodiments are not necessarily mandatory, and some features or steps may be omitted. The order of the steps described in any of the figures may be changed as appropriate.

Some or all of the above-described example embodiments may be described as the following Supplementary Notes, but are not limited to the following Supplementary Notes.

(Supplementary Note 1)

An information processing device including

an acquisition unit for acquiring a target product handling history indicating a history of handling of a target product to be audited,

a prediction unit for predicting a post-handling amount of handling included in the target product handling history using a prediction model trained based on the target product handling history using production information about production of a product, handling content information indicating a handling content of the product, and amount information indicating pre- and post- handling amounts of the product as training data to calculate a target product prediction amount, and

an abnormality determination unit for determining whether there is an abnormality in an amount change indicated by the target product handling history based on a difference between a post-handling amount of the target product in the target product handling history and the target product prediction amount calculated by the prediction unit.

(Supplementary Note 2)

The information processing device according to Supplementary Note 1, wherein the prediction model is trained using information about at least one of a production area, a brand, and a production business operator of the product as the production information.

(Supplementary Note 3)

The information processing device according to Supplementary Note 1 or 2, wherein the abnormality determination unit determines that the amount change is normal in a case where the difference is less than a threshold value, and determines that the amount change is abnormal in a case where the difference is equal to or more than the threshold value.

(Supplementary Note 4)

The information processing device according to any one of Supplementary Notes 1 to 3, wherein the abnormality determination unit generates verification data including a pre-handling amount of the target product, handling information about the target product, and possible combinations of production information, and determines whether there is an abnormality in the amount change using the verification data.

(Supplementary Note 5)

The information processing device according to Supplementary Note 4, wherein the abnormality determination unit calculates a prediction value of a post-handling amount related to each of the plurality of pieces of verification data as a verification prediction amount using the prediction model, and determines that the amount change is normal in a case where the target product prediction amount is close to a post-handling amount in the target product handling history among the target product prediction amount and the plurality of verification prediction amounts, and determines that the amount change is abnormal otherwise.

(Supplementary Note 6)

The information processing device according to Supplementary Note 5, wherein the abnormality determination unit identifies verification data indicating the verification prediction amount closest to a post-handling amount in the target product handling history from the plurality of pieces of verification data in a case where it is determined that the amount change is abnormal, and notifies a user of information about the verification data.

(Supplementary Note 7)

The information processing device according to any one of Supplementary Notes 1 to 6, wherein

the prediction model is trained using the training data grouped based on feature information indicating a feature of the production information, and
the abnormality determination unit identifies a group to which production information related to the target product handling history belongs, and determines whether there is an abnormality in the amount change based on the identified group.

(Supplementary Note 8)

The information processing device according to any one of Supplementary Notes 1 to 7, further including a handling history product-based classification unit for acquiring time-series handling history information in which histories of handling of a plurality of products is stored in chronological order, and extracts a handling history of each product by performing a classification process on the time-series handling history information,
wherein the prediction model is trained using the extracted handling history of each product.

(Supplementary Note 9)

A prediction model generated by being trained based on training data including production information related to production of a product, handling content information indicating a handling content of the product, and amount information indicating pre- and post- handling amounts of the product, the model for causing a computer to function to, when a target product handling history indicating a history of handling of a target product to be audited is input, predict a post-handling amount of handling included in the target product handling history, and output a target product prediction amount.

(Supplementary Note 10)

The prediction model according to Supplementary Note 9, wherein the prediction model is trained using information about at least one of a production area, a brand, and a production business operator of the product as the production information.

(Supplementary Note 11)

An information processing method including

an acquisition step of acquiring a target product handling history indicating a history of handling of a target product to be audited,
a prediction step of predicting a post-handling amount of handling included in the target product handling history using a prediction model trained based on the target product handling history using production information about production of a product, handling content information indicating a handling content of the product, and amount information indicating pre- and post- handling amounts of the product as training data to calculate a target product prediction amount, and
an abnormality determination step of determining whether there is an abnormality in an amount change indicated by the target product handling history based on a difference between a post-handling amount of the target product in the target product handling history and the target product prediction amount calculated by the prediction step.

(Supplementary Note 12)

The information processing method according to Supplementary Note 11, wherein the prediction model is trained using information about at least one of a production area, a brand, and a production business operator of the product as the production information.

(Supplementary Note 13)

The information processing method according to Supplementary Note 11 or 12, wherein the abnormality determination step includes determining that the amount change is normal in a case where the difference is less than a threshold value, and determining that the amount change is abnormal in a case where the difference is equal to or more than the threshold value.

(Supplementary Note 14)

The information processing method according to any one of Supplementary Notes 11 to 13, wherein the abnormality determination step includes generating verification data including a pre-handling amount of the target product, handling information about the target product, and possible combinations of production information, and determining whether there is an abnormality in the amount change using the verification data.

(Supplementary Note 15)

The information processing method according to Supplementary Note 14, wherein the abnormality determination step includes calculating a prediction value of a post-handling amount related to each of the plurality of pieces of verification data as a verification prediction amount using the prediction model, and determining that the amount change is normal in a case where the target product prediction amount is close to a post-handling amount in the target product handling history among the target product prediction amount and the plurality of verification prediction amounts, and determining that the amount change is abnormal otherwise.

(Supplementary Note 16)

The information processing method according to Supplementary Note 15, wherein the abnormality determination step includes identifying verification data indicating the verification prediction amount closest to a post-handling amount in the target product handling history from the plurality of pieces of verification data in a case where it is determined that the amount change is abnormal, and notifying a user of information about the verification data.

(Supplementary Note 17)

The information processing method according to any one of Supplementary Notes 11 to 16, wherein

the prediction model is trained using the training data grouped based on feature information indicating a feature of the production information, and
the abnormality determination step includes identifying a group to which production information related to the target product handling history belongs, and determining whether there is an abnormality in the amount change based on the identified group.

(Supplementary Note 18)

The information processing method according to any one of Supplementary Notes 11 to 17, further including a handling history product-based classification step of acquiring time-series handling history information in which histories of handling of a plurality of products is stored in chronological order, and extracting a handling history of each product by performing a classification process on the time-series handling history information,
wherein the prediction model is trained using the extracted handling history of each product.

(Supplementary Note 19)

A program for causing a computer to execute

an acquisition step of acquiring a target product handling history indicating a history of handling of a target product to be audited,
a prediction step of predicting a post-handling amount of handling included in the target product handling history using a prediction model trained based on the target product handling history using production information about production of a product, handling content information indicating a handling content of the product, and amount information indicating pre- and post- handling amounts of the product as training data to calculate a target product prediction amount, and
an abnormality determination step of determining whether there is an abnormality in an amount change indicated by the target product handling history based on a difference between a post-handling amount of the target product in the target product handling history and the target product prediction amount calculated by the prediction step.

(Supplementary Note 20)

The program according to Supplementary Note 19, wherein the prediction model is trained using information about at least one of a production area, a brand, and a production business operator of the product as the production information.
Some or all of the elements (for example, configurations and functions) described in Supplementary Notes 2 to 8 dependent on Supplementary Note 1 can also be dependent on Supplementary Notes 9, 11, and 19 by the same dependency relationship as Supplementary Notes 2 to 8. Some or all of the elements described in the optional Supplementary Note can be applied to recording means, systems, and methods for recording various pieces of hardware, software, and software.
This application is based upon and claims the benefit of priority from Japanese patent application No. 2023-021783, filed on February 15, 2023, the disclosure of which is incorporated herein in its entirety by reference.

**Reference Signs List**

10, 10a to 10c information processing system

11, 11bhandling history shaping unit
12 prediction model training unit
13 prediction model storage unit
14, 14a, 14b abnormality detection unit
15 handling history creation unit
16 handling history distribution management unit
17 handling history storage unit
18 handling history tracking unit
21 production information combination creation unit
22 production information combination storage unit
31 production information grouping unit
32 classification result storage unit
33 production information feature vector storage unit
34 production information associating unit
35 centroid vector storage unit
41 handling history food-based classification unit
100 information processing device
101 acquisition unit
102 prediction unit
103 abnormality determination unit
111 change amount training data generation unit
112, 112b food feature vector generation unit
141 explanatory variable collection unit
142, 142b food feature vector generation unit
143 change amount prediction unit
144 prediction error threshold value determination unit
145 production information combination coverage unit
146 handling history consistency determination unit
1001 explanatory variable
1002 target variable
1003 collection data
1004 food feature vector
1005 collection data
1006 food feature vector
1007 prediction value
2001 explanatory variable
2003 collection data
2004, 2004a verification data
2005 list of post-handling weight prediction value
2006 prediction value
3001 production area feature vector
3002 brand feature vector
3003 production business operator feature vector
3004 set of production area and production area group ID
3005 set of brand and brand group ID
3006 set of production business operator and production business operator group ID
3007 set of production area group ID and centroid vector of production area group
3008 set of a brand group ID and centroid vector of brand group
3009 set of production business operator group ID and centroid vector of production business operator group
3010 explanatory variable
3011 food feature vector
3012 production area feature vector
3013 brand feature vector
3014 production business operator feature vector
3015 Set of new production area and production area group ID
3016 set of new brand and brand group ID
3017 set of new production business operator and production business operator group ID
P1 to P201 handling history

900 computer
902 bus
904 processor
906 memory
908 storage device
910 input/output interface
912 network interface

## Claims

**1.** An information processing device comprising:

acquisition means for acquiring a target product handling history indicating a history of handling of a target product to be audited;
prediction means for predicting a post-handling amount of handling included in the target product handling history using a prediction model trained based on the target product handling history using production information about production of a product, handling content information indicating a handling content of the product, and amount information indicating pre- and post- handling amounts of the product as training data and calculating a target product prediction amount; and
abnormality determination means for determining whether there is an abnormality in an amount change indicated by the target product handling history based on a difference between a post-handling amount of the target product in the target product handling history and the target product prediction amount calculated by the prediction means.

**2.** The information processing device according to claim 1, wherein the prediction model is trained using information about at least one of a production area, a brand, and a production business operator of the product as the production information.

**3.** The information processing device according to claim 1, wherein the abnormality determination means determines that the amount change is normal in a case where the difference is less than a threshold value, and determines that the amount change is abnormal in a case where the difference is equal to or more than the threshold value.

**4.** The information processing device according to claim 1, wherein the abnormality determination means generates verification data including a pre-handling amount of the target product, handling information about the target product, and possible combinations of production information, and determines whether there is an abnormality in the amount change using the verification data.

**5.** The information processing device according to claim 4, wherein the abnormality determination means calculates a prediction value of a post-handling amount related to each of a plurality of pieces of the verification data as a verification prediction amount using the prediction model, and determines that the amount change is normal in a case where the target product prediction amount is close to a post-handling amount in the target product handling history among the target product prediction amount and a plurality of the verification prediction amounts, and determines that the amount change is abnormal otherwise.

**6.** The information processing device according to claim 5, wherein the abnormality determination means identifies verification data indicating the verification prediction amount closest to a post-handling amount in the target product handling history from a plurality of pieces of the verification data in a case where it is determined that the amount change is abnormal, and notifies a user of information about the verification data.

**7.** The information processing device according to claim 1, wherein

the prediction model is trained using the training data grouped based on feature information indicating a feature of the production information, and
the abnormality determination means identifies a group to which production information related to the target product handling history belongs, and determines whether there is an abnormality in the amount change based on the identified group.

**8.** The information processing device according to any one of claims 1 to 7, further comprising a handling history product-based classification means for acquiring time-series handling history information in which histories of handling of a plurality of products is stored in chronological order, and extracting a handling history of each product by performing a classification process on the time-series handling history information,
wherein the prediction model is trained using the extracted handling history of each product.

**9.** A prediction model generated by being trained based on training data including production information related to production of a product, handling content information indicating a handling content of the product, and amount information indicating pre- and post- handling amounts of the product, the model for causing a computer to function to, when a target product handling history indicating a history of handling of a target product to be audited is input, predict a post-handling amount of handling included in the target product handling history, and output a target product prediction amount.

**10.** The prediction model according to claim 9, wherein the prediction model is trained using information about at least one of a production area, a brand, and a production business operator of the product as the production information.

**11.** An information processing method comprising:

acquiring a target product handling history indicating a history of handling of a target product to be audited;
predicting a post-handling amount of handling included in the target product handling history using a prediction model trained based on the target product handling history using production information about production of a product, handling content information indicating a handling content of the product, and amount information indicating pre- and post- handling amounts of the product as training data and calculating a target product prediction amount; and
determining whether there is an abnormality in an amount change indicated by the target product handling history based on a difference between a post-handling amount of the target product in the target product handling history and the calculated target product prediction amount.

**12.** The information processing method according to claim 11, wherein the prediction model is trained using information about at least one of a production area, a brand, and a production business operator of the product as the production information.

**13.** The information processing method according to claim 11, wherein the determining whether there is an abnormality in the amount change includes determining that the amount change is normal in a case where the difference is less than a threshold value, and determining that the amount change is abnormal in a case where the difference is equal to or more than the threshold value.

**14.** The information processing method according to claim 11, wherein the determining whether there is an abnormality in the amount change includes generating verification data including a pre-handling amount of the target product, handling information about the target product, and possible combinations of production information, and determining whether there is an abnormality in the amount change using the verification data.

**15.** The information processing method according to claim 14, wherein the determining whether there is an abnormality in the amount change includes calculating a prediction value of a post-handling amount related to each of a plurality of pieces of the verification data as a verification prediction amount using the prediction model, and determining that the amount change is normal in a case where the target product prediction amount is close to a post-handling amount in the target product handling history among the target product prediction amount and a plurality of the verification prediction amounts, and determining that the amount change is abnormal otherwise.

**16.** The information processing method according to claim 15, wherein the determining whether there is an abnormality in the amount change includes identifying verification data indicating the verification prediction amount closest to a post-handling amount in the target product handling history from a plurality of pieces of the verification data in a case where it is determined that the amount change is abnormal, and notifying a user of information about the verification data.

**17.** The information processing method according to claim 11, wherein

the prediction model is trained using the training data grouped based on feature information indicating a feature of the production information, and

the determining whether there is an abnormality in the amount change includes identifying a group to which production information related to the target product handling history belongs, and determining whether there is an abnormality in the amount change based on the identified group.

**18.** The information processing method according to any one of claims 11 to 17, further comprising

acquiring time-series handling history information in which histories of handling of a plurality of products is stored in chronological order, and
extracting a handling history of each product by performing a classification process on the time-series handling history information,
wherein the prediction model is trained using the extracted handling history of each product.

**19.** A program for causing a computer to execute:

acquiring a target product handling history indicating a history of handling of a target product to be audited;
predicting a post-handling amount of handling included in the target product handling history using a prediction model trained based on the target product handling history using production information about production of a product, handling content information indicating a handling content of the product, and amount information indicating pre- and post- handling amounts of the product as training data and calculating a target product prediction amount; and
determining whether there is an abnormality in an amount change indicated by the target product handling history based on a difference between a post-handling amount of the target product in the target product handling history and the calculated target product prediction amount.

**20.** The program according to claim 19, wherein the prediction model is trained using information about at least one of a production area, a brand, and a production business operator of the product as the production information.

100
INFORMATION PROCESSING DEVICE
ACQUISITION UNIT
101
PREDICTION UNIT
102
ABNORMALITY DETERMINATION UNIT
103

Fig. 1

START
ACQUIRE TARGET PRODUCT HANDLING HISTORY
S1
CALCULATE TARGET PRODUCT PREDICTION AMOUNT USING PREDICTION MODEL
S2
DETERMINE WHETHER THERE IS ABNORMALITY IN AMOUNT CHANGE INDICATED BY TARGET PRODUCT HANDLING HISTORY BASED ON DIFFERENCE BETWEEN POST-HANDLING AMOUNT OF TARGET PRODUCT AND TARGET PRODUCT PREDICTION AMOUNT
S3
END

Fig. 2

10
TRAINING PROCESS
TRACEABILITY SYSTEM
11
12
13
HANDLING HISTORY SHAPING UNIT
PREDICTION MODEL TRAINING UNIT
PREDICTION MODEL STORAGE UNIT
HANDLING HISTORY CREATION UNIT
15
HANDLING HISTORY TRACKING UNIT
18
14
ABNORMALITY DETECTION UNIT
HANDLING HISTORY DISTRIBUTION MANAGEMENT UNIT
16
HANDLING HISTORY STORAGE UNIT
17

Fig. 3

17
HANDLING HISTORY STORAGE UNIT
11
HANDLING HISTORY SHAPING UNIT
111
CHANGE AMOUNT TRAINING DATA GENERATION UNIT
112
FOOD FEATURE VECTOR GENERATION UNIT
12
PREDICTION MODEL TRAINING UNIT

Fig. 4

CHANGE AMOUNT TRAINING DATA GENERATION UNIT
111
P1
P2
P3
P9
P10
INPUT
BIRTH REGISTRATION
·001
·KAGAWA PREFECTURE
·BRAND B1
·MALE
·A PRODUCTION
·3kg
BIRTH REGISTRATION
·002
·KAGAWA PREFECTURE
·BRAND B1
·FEMALE
·A PRODUCTION
·4kg
TRANSACTION
·001
·SHIPPING
·A PRODUCTION
·100kg
·PREVIOUS POINTER
TRANSACTION
·002
·ARRIVAL
·A SLAUGHTER
·100kg
·PREVIOUS POINTER
TREATMENT
·001
·SALES
·A SALES
·50kg
·PREVIOUS POINTER
1001
1002
OUTPUT

| PRODUCTION AREA | BRAND | GENDER | PRODUCTION BUSINESS OPERATOR | HANDLING CONTENT | PRE-HANDLING WEIGHT |
|---|---|---|---|---|---|
| KAGAWA PREFECTURE | BRAND B1 | MALE | A SLAUGHTER | SLAUGHTER | 100 |
| : | : | : | : | : | : |
| KAGOSHIMA PREFECTURE | BRAND B2 | FEMALE | Z PRODUCTION | DISMANTLING | 120 |

| POST-HANDLING WEIGHT |
|---|
| 70 |
| : |
| 90 |

Fig. 5

P11
P12
P13
P14
P20
BIRTH REGISTRATION
• 001
• KAGAWA PREFECTURE
• BRAND B1
• MALE
• A PRODUCTION
• 3kg
TRANSACTION
• 001
• SHIPPING
• A PRODUCTION
• 100kg
• PREVIOUS POINTER
TRANSACTION
• 001
• ARRIVAL
• A SLAUGHTER
• 100kg
• PREVIOUS POINTER
TREATMENT
• 001
• DISMANTLING
• A SLAUGHTER
• 70kg
• PREVIOUS POINTER
TREATMENT
• 001
• SALES
• A SALES
• 50kg
• PREVIOUS POINTER
1003
PRODUCTION AREA
BRAND
GENDER
PRODUCTION BUSINESS OPERATOR
HANDLING CONTENT
PRE-HANDLING WEIGHT
POST-HANDLING WEIGHT
KAGAWA PREFECTURE
BRAND B1
MALE
A PRODUCTION
DISMANTLING
100
70

Fig. 6

FOOD FEATURE VECTOR GENERATION UNIT
112

1001

INPUT

| PRODUCTION AREA | BRAND | GENDER | PRODUCTION BUSINESS OPERATOR | HANDLING CONTENT | PRE-HANDLING WEIGHT |
|---|---|---|---|---|---|
| KAGAWA PREFECTURE | BRAND B1 | MALE | A PRODUCTION | SLAUGHTER | 100 |
| : | : | : | : | : | : |
| KAGOSHIMA PREFECTURE | BRAND B2 | FEMALE | Z PRODUCTION | DISMANTLING | 120 |

1004

OUTPUT

| KAGAWA PREFECTURE | TOKUSHIMA PREFECTURE | KOCHI PREFECTURE | .. | DISMANTLING | PRE-HANDLING WEIGHT |
|---|---|---|---|---|---|
| 1 | 0 | 0 | .. | 0 | 0.05 |
| : | : | : | : | : | : |
| 0 | 0 | 0 | .. | 1 | 0.8 |

Fig. 7

PREDICTION MODEL TRAINING UNIT
12

1004

1002

TARGET VARIABLE

INPUT

| KAGAWA PREFECTURE | TOKUSHIMA PREFECTURE | KOCHI PREFECTURE | .. | DISMANTLING | PRE-HANDLING WEIGHT | POST-HANDLING WEIGHT |
|---|---|---|---|---|---|---|
| 1 | 0 | 0 | .. | 0 | 0.05 | 100 |
| : | : | : | : | : | : | : |
| 0 | 0 | 0 | .. | 1 | 0.8 | 90 |

OUTPUT

REGRESSION EQUATION: POST-HANDLING WEIGHT $Y = b_1 \times$ KAGAWA PREFECTURE$(X_1)$ $+ b_2 \times$ TOKUSHIMA PREFECTURE$(X_2)$ $+ \cdots + b0$

Fig. 8

START
CHANGE AMOUNT TRAINING DATA GENERATION UNIT ACQUIRES PAST HANDLING HISTORY IN HANDLING HISTORY STORAGE UNIT
S11
GENERATE EMPTY LIST FOR STORING CHANGE AMOUNT TRAINING DATA
S12
GENERATE CHANGE AMOUNT TRAINING DATA (NUMBER OF HANDLING HISTORIES IN BUSINESS OPERATOR)
S13
COLLECT HANDLING CONTENT AND VALUES OF POST-HANDLING WEIGHT AND LIKE FROM HANDLING HISTORY RELATED TO TREATMENT IN BUSINESS OPERATOR, VALUES OF PRE-HANDLING WEIGHT AND LIKE FROM HANDLING HISTORY ADDED IMMEDIATELY BEFORE, AND PRODUCTION INFORMATION FROM HANDLING HISTORY IN PRODUCTION PROCESS
S14
ADD HANDLING CONTENT, VALUES OF PRE-AND POST-HANDLING WEIGHTS, AND PRODUCTION INFORMATION TO LIST
S15
GENERATE CHANGE AMOUNT TRAINING DATA
S16
FOOD FEATURE VECTOR GENERATION UNIT PREPROCESSES EXPLANATORY VARIABLE IN LIST OF CHANGE AMOUNT TRAINING DATA TO GENERATE FOOD FEATURE VECTOR
S17
PREDICTION MODEL TRAINING UNIT LEARNS FOOD FEATURE VECTOR AND TARGET VARIABLE IN LIST OF CHANGE AMOUNT TRAINING DATA, AND GENERATES CHANGE AMOUNT PREDICTION MODEL THAT PREDICTS POST-HANDLING WEIGHT
S18
END

Fig. 9

15
HANDLING HISTORY CREATION UNIT
14
ABNORMALITY DETECTION UNIT
141
EXPLANATORY VARIABLE COLLECTION UNIT
142
FOOD FEATURE VECTOR GENERATION UNIT
13
PREDICTION MODEL STORAGE UNIT
144
CHANGE AMOUNT PREDICTION UNIT
PREDICTION ERROR THRESHOLD VALUE DETERMINATION UNIT
143
17
HANDLING HISTORY STORAGE UNIT

Fig. 10

EXPLANATORY VARIABLE COLLECTION UNIT
141
P101
INPUT
TREATMENT
• 100
• DISMANTLING
• A SLAUGHTER
• 70kg
• PREVIOUS POINTER
17
HANDLING HISTORY STORAGE UNIT
1005
P101
OUTPUT
TREATMENT
• 100
• DISMANTLING
• A SLAUGHTER
• 70kg
• PREVIOUS POINTER

| PRODUCTION AREA | BRAND | GENDER | PRODUCTION BUSINESS OPERATOR | HANDLING CONTENT | PRE-HANDLING WEIGHT |
|---|---|---|---|---|---|
| KAGAWA PREFECTURE | BRAND B1 | MALE | A PRODUCTION | DISMANTLING | 100 |

Fig. 11

PAST HANDLING HISTORY OF FOOD ID100
NEW HANDLING HISTORY OF FOOD ID100
OLD
NEW
P31
P32
P33
P101
BIRTH REGISTRATION
• 100
• KAGAWA PREFECTURE
• BRAND B1
• MALE
• A PRODUCTION
• 3kg
TRANSACTION
• 100
• SHIPPING
• A PRODUCTION
• 100kg
• PREVIOUS POINTER
TRANSACTION
• 100
• ARRIVAL
• A SLAUGHTER
• 100kg
• PREVIOUS POINTER
TREATMENT
• 100
• DISMANTLING
• A SLAUGHTER
• 70kg
• PREVIOUS POINTER
1005

| PRODUCTION AREA | BRAND | GENDER | PRODUCTION BUSINESS OPERATOR | HANDLING CONTENT | PRE-HANDLING WEIGHT |
|---|---|---|---|---|---|
| KAGAWA PREFECTURE | BRAND B1 | MALE | A PRODUCTION | DISMANTLING | 100 |

Fig. 12

CHANGE AMOUNT PREDICTION UNIT
143
1006
13
INPUT
KAGAWA PREFECTURE
TOKUSHIMA PREFECTURE
KOCHI PREFECTURE
..
DISMANTLING
PRE-HANDLING WEIGHT
1
0
0
..
1
0.7
PREDICTION MODEL STORAGE UNIT
1007
OUTPUT
POST-HANDLING WEIGHT PREDICTION VALUE
W1

Fig. 13

PREDICTION ERROR THRESHOLD VALUE DETERMINATION UNIT
144
TREATMENT
• 100
• DISMANTLING
• A SLAUGHTER
• 70kg
• PREVIOUS POINTER
P101
1007
INPUT
POST-HANDLING WEIGHT PREDICTION VALUE
W1
OUTPUT
WHEN DETERMINED AS NORMAL
P101
TREATMENT
• 100
• DISMANTLING
• A SLAUGHTER
• 70kg
• PREVIOUS POINTER
WHEN DETERMINED AS ABNORMAL
P101
TREATMENT
• 100
• DISMANTLING
• A SLAUGHTER
• 70kg
• PREVIOUS POINTER
1007
POST-HANDLING WEIGHT PREDICTION VALUE
W1

Fig. 14

START
INPUT HANDLING HISTORY
S21
ACQUIRE PAST HANDLING HISTORY RELATED TO FOOD SAME AS THAT OF INPUT HANDLING HISTORY FROM HANDLING HISTORY STORAGE UNIT
S22
COLLECT HANDLING CONTENT FROM INPUT HANDLING HISTORY, VALUES OF PRE-HANDLING WEIGHT AND LIKE FROM PAST HANDLING HISTORY ADDED IMMEDIATELY BEFORE, AND PRODUCTION INFORMATION FROM PAST HANDLING HISTORY IN PRODUCTION PROCESS
S23
PREPROCESSES COLLECTION DATA, AND GENERATE FOOD FEATURE VECTOR
S24
PREDICT POST-HANDLING WEIGHT USING CHANGE AMOUNT PREDICTION MODEL AND FOOD FEATURE VECTOR IN PREDICTION MODEL STORAGE UNIT
S25
CALCULATE PREDICTION ERROR FROM PREDICTION VALUE AND INPUT HANDLING HISTORY
S26
S27
PREDICTION ERROR IS LESS THAN THRESHOLD VALUE?
YES
NO
DETERMINE AS NORMAL
S28
DETERMINE AS ABNORMAL
S30
TRANSMIT INPUT HANDLING HISTORY TO HANDLING HISTORY DISTRIBUTION MANAGEMENT UNIT
S29
NOTIFY USER OF INPUT HANDLING HISTORY AND PREDICTION VALUE
S31
END

Fig. 15

10a
TRAINING PROCESS
TRACEABILITY SYSTEM
11
12
13
HANDLING HISTORY SHAPING UNIT
PREDICTION MODEL TRAINING UNIT
PREDICTION MODEL STORAGE UNIT
HANDLING HISTORY CREATION UNIT
15
HANDLING HISTORY TRACKING UNIT
18
14a
21
22
PRODUCTION INFORMATION COMBINATION CREATION UNIT
PRODUCTION INFORMATION COMBINATION STORAGE UNIT
ABNORMALITY DETECTION UNIT
HANDLING HISTORY DISTRIBUTION MANAGEMENT UNIT
16
HANDLING HISTORY STORAGE UNIT
17

Fig. 16

PRODUCTION INFORMATION COMBINATION CREATION UNIT
21

2001

INPUT

| PRODUCTION AREA | BRAND | GENDER | PRODUCTION BUSINESS OPERATOR | HANDLING CONTENT | PRE-HANDLING WEIGHT |
|---|---|---|---|---|---|
| KAGAWA PREFECTURE | BRAND B1 | MALE | A SLAUGHTER | SLAUGHTER | 100 |
| : | : | : | : | : | : |
| KAGOSHIMA PREFECTURE | BRAND B2 | FEMALE | Z PRODUCTION | DISMANTLING | 120 |

2002

OUTPUT

| PRODUCTION AREA | BRAND | PRODUCTION BUSINESS OPERATOR |
|---|---|---|
| KAGAWA PREFECTURE | BRAND B1 | A SLAUGHTER |
| : | : | : |
| KAGOSHIMA PREFECTURE | BRAND B2 | Z PRODUCTION |

Fig. 17

11
HANDLING HISTORY CREATION UNIT
22
PRODUCTION INFORMATION COMBINATION STORAGE UNIT
14a
ABNORMALITY DETECTION UNIT
141
EXPLANATORY VARIABLE COLLECTION UNIT
145
PRODUCTION INFORMATION COMBINATION COVERAGE UNIT
142
FOOD FEATURE VECTOR GENERATION UNIT
13
PREDICTION MODEL STORAGE UNIT
146
CHANGE AMOUNT PREDICTION UNIT
HANDLING HISTORY CONSISTENCY DETERMINATION UNIT
143
17
HANDLING HISTORY STORAGE UNIT

Fig. 18

PRODUCTION INFORMATION COMBINATION COVERAGE UNIT
145
2003
22
INPUT
PRODUCTION AREA
BRAND
GENDER
PRODUCTION BUSINESS OPERATOR
HANDLING CONTENT
PRE-HANDLING WEIGHT
KAGAWA PREFECTURE
BRAND B1
MALE
A PRODUCTION
DISMANTLING
100
PRODUCTION INFORMATION COMBINATION STORAGE UNIT
2003, 2004
OUTPUT
PRODUCTION AREA
BRAND
GENDER
PRODUCTION BUSINESS OPERATOR
HANDLING CONTENT
PRE-HANDLING WEIGHT
2003
KAGAWA PREFECTURE
BRAND B1
MALE
A PRODUCTION
DISMANTLING
100
2004
TOKUSHIMA PREFECTURE
BRAND B1
MALE
A PRODUCTION
DISMANTLING
100
KAGOSHIMA PREFECTURE
BRAND B2
MALE
Z PRODUCTION
DISMANTLING
100

Fig. 19

HANDLING HISTORY CONSISTENCY DETERMINATION UNIT
146
INPUT
2005
POST-HANDLING WEIGHT PREDICTION VALUE
W1
W2
:
W20
P201
TREATMENT
· 100
· DISMANTLING
· A SLAUGHTER
· 70kg
· PREVIOUS POINTER
2003, 2004
PRODUCTION AREA
BRAND
HANDLING CONTENT
PRE-HANDLING WEIGHT
KAGAWA PREFECTURE
BRAND B1
DISMANTLING
100
2003
TOKUSHIMA PREFECTURE
BRAND B1
DISMANTLING
100
2004
KAGOSHIMA PREFECTURE
BRAND B2
DISMANTLING
100
OUTPUT
WHEN DETERMINED AS NORMAL
P201
TREATMENT
· 100
· DISMANTLING
· A SLAUGHTER
· 70kg
· PREVIOUS POINTER
WHEN DETERMINED AS ABNORMAL
P201
TREATMENT
· 100
· DISMANTLING
· A SLAUGHTER
· 70kg
· PREVIOUS POINTER
2004a
PRODUCTION AREA
BRAND
GENDER
PRODUCTION BUSINESS OPERATOR
PROCESSING CONTENT
PRE-HANDLING WEIGHT
TOKUSHIMA PREFECTURE
BRAND B1
MALE
A PRODUCTION
DISMANTLING
100
2006
POST-HANDLING WEIGHT PREDICTION VALUE
W1

Fig. 20

START
INPUT HANDLING HISTORY
S31
ACQUIRE PAST HANDLING HISTORY RELATED TO FOOD, IN HANDLING HISTORY STORAGE UNIT, SAME AS THAT OF INPUT HANDLING HISTORY
S32
COLLECT HANDLING CONTENT FROM INPUT HANDLING HISTORY, VALUES OF PRE-HANDLING WEIGHT AND LIKE FROM PAST HANDLING HISTORY ADDED IMMEDIATELY BEFORE, AND PRODUCTION INFORMATION FROM PAST HANDLING HISTORY IN PRODUCTION PROCESS
S33
GENERATE VERIFICATION DATA IN WHICH ALL COMBINATIONS FOR PRODUCTION INFORMATION ARE INCLUDED BASED ON COMBINATION OF HANDLING CONTENT, VALUES OF PRE-HANDLING WEIGHT AND LIKE, AND PRODUCTION INFORMATION IN PRODUCTION INFORMATION COMBINATION STORAGE UNIT
S34
PREPROCESSES COLLECTION DATA, AND GENERATE FOOD FEATURE VECTOR
S35
PREPROCESSES VERIFICATION DATA, AND GENERATE FOOD FEATURE VECTOR
S36
A

Fig. 21

A
PREDICT POST-HANDLING WEIGHT USING CHANGE AMOUNT PREDICTION MODEL IN PREDICTION MODEL STORAGE UNIT AND FOOD FEATURE VECTOR BASED ON COLLECTION DATA
S37
PREDICT POST-HANDLING WEIGHT USING CHANGE AMOUNT PREDICTION MODEL IN PREDICTION MODEL STORAGE UNIT AND FOOD FEATURE VECTOR BASED ON VERIFICATION DATA
S38
CALCULATE PREDICTION ERROR FROM PREDICTION VALUE AND INPUT HANDLING HISTORY
S39
PREDICTION ERROR IN COLLECTION DATA IS MINIMUM?
S40
YES
NO
DETERMINE AS NORMAL
S41
DETERMINE AS ABNORMAL
S43
TRANSMIT INPUT HANDLING HISTORY TO HANDLING HISTORY DISTRIBUTION MANAGEMENT UNIT
S42
NOTIFY USER OF INPUT HANDLING HISTORY, VERIFICATION DATA HAVING SMALLEST PREDICTION ERROR, AND PREDICTION VALUE IN COLLECTION DATA TO USER
S44
END

Fig. 22

10b
TRAINING PROCESS
TRACEABILITY SYSTEM
11b
HANDLING HISTORY SHAPING UNIT
12
PREDICTION MODEL TRAINING UNIT
13
PREDICTION MODEL STORAGE UNIT
HANDLING HISTORY CREATION UNIT
15
HANDLING HISTORY TRACKING UNIT
18
14b
ABNORMALITY DETECTION UNIT
21
PRODUCTION INFORMATION COMBINATION CREATION UNIT
31
PRODUCTION INFORMATION GROUPING UNIT
32
CLASSIFICATION RESULT STORAGE UNIT
HANDLING HISTORY DISTRIBUTION MANAGEMENT UNIT
16
22
PRODUCTION INFORMATION COMBINATION STORAGE UNIT
HANDLING HISTORY STORAGE UNIT
17
CLASSIFICATION PROCESS
35
33
PRODUCTION INFORMATION FEATURE VECTOR STORAGE UNIT
34
PRODUCTION INFORMATION ASSOCIATING UNIT
CENTROID VECTOR STORAGE UNIT

Fig. 23

PRODUCTION INFORMATION GROUPING UNIT 31

INPUT

3001

| PRODUCTION AREA (MAIN KEY) | ANNUAL AVERAGE TEMPERATURE | MONTHLY HIGHEST TEMPERATURE | .. | ANNUAL NUMBER OF PRECIPITATION DAYS |
|---|---|---|---|---|
| KAGAWA PREFECTURE | 0.49 | 0.22 | .. | -1.09 |
| : | : | : | : | : |
| OKINAWA PREFECTURE | 3.37 | -0.23 | .. | 0.87 |

3002

| BRAND (MAIN KEY) | TYPE C1 | TYPE C2 | .. | AVERAGE BODY WEIGHT |
|---|---|---|---|---|
| BRAND B1 | 1 | 0 | .. | 0.7 |
| : | : | : | : | : |
| BRAND B2 | 1 | 0 | .. | 0.7 |

3003

| PRODUCTION BUSINESS OPERATOR (MAIN KEY) | PIG HOUSE | GRAZING | .. | MONTHLY SHIPPED NUMBER |
|---|---|---|---|---|
| A PRODUCTION | 1 | 0 | .. | 0.32 |
| : | : | : | : | : |
| Z PRODUCTION | 0 | 1 | .. | 0.54 |

Fig. 24

PRODUCTION INFORMATION GROUPING UNIT

31

OUTPUT

3004

| PRODUCTION AREA | PRODUCTION AREA GROUP ID |
|---|---|
| KAGAWA PREFECTURE | 3 |
| : | : |
| OKINAWA PREFECTURE | 5 |

3005

| BRAND | BRAND GROUP ID |
|---|---|
| BRAND B1 | 3 |
| : | : |
| BRAND B2 | 1 |

3006

| PRODUCTION BUSINESS OPERATOR | PRODUCTION BUSINESS OPERATOR GROUP ID |
|---|---|
| A PRODUCTION | A PRODUCTION |
| : | : |
| Z PRODUCTION | Z PRODUCTION |

3007

| PRODUCTION AREA GROUP ID (MAIN KEY) | ANNUAL AVERAGE TEMPERATURE | MONTHLY HIGHEST TEMPERATURE | .. | ANNUAL NUMBER OF PRECIPITATION DAYS |
|---|---|---|---|---|
| 1 | 0.49 | 0.22 | .. | -1.09 |
| : | : | : | : | : |
| n | 3.37 | -0.23 | .. | 0.87 |

3008

| BRAND GROUP ID (MAIN KEY) | TYPE C1 | TYPE C2 | .. | AVERAGE BODY WEIGHT |
|---|---|---|---|---|
| 1 | 1 | 0 | .. | 0.6 |
| : | : | : | : | : |
| m | 0 | 0 | .. | 0.8 |

3009

| PRODUCTION BUSINESS OPERATOR ID (MAIN KEY) | PIG HOUSE | GRAZING | .. | MONTHLY SHIPPED NUMBER |
|---|---|---|---|---|
| 1 | 1 | 0 | .. | 0.32 |
| : | : | : | : | : |
| k | 0 | 1 | .. | 0.54 |

Fig. 25

17
HANDLING HISTORY STORAGE UNIT
31
PRODUCTION INFORMATION GROUPING UNIT
11b
HANDLING HISTORY SHAPING UNIT
111
CHANGE AMOUNT TRAINING DATA GENERATION UNIT
112b
FOOD FEATURE VECTOR GENERATION UNIT
12
PREDICTION MODEL TRAINING UNIT

Fig. 26

FOOD FEATURE VECTOR GENERATION UNIT ~112b

INPUT 3010

| PRODUCTION AREA | BRAND | GENDER | PRODUCTION BUSINESS OPERATOR | HANDLING CONTENT | PRE-HANDLING WEIGHT |
|---|---|---|---|---|---|
| KAGAWA PREFECTURE | BRAND B1 | MALE | A PRODUCTION | SLAUGHTER | 100 |
| : | : | : | : | : | : |
| KAGOSHIMA PREFECTURE | BRAND B2 | FEMALE | Z PRODUCTION | DISMANTLING | 120 |

3004

| PRODUCTION AREA | PRODUCTION AREA GROUP ID |
|---|---|
| KAGAWA PREFECTURE | 3 |
| : | : |
| OKINAWA PREFECTURE | 5 |

3005

| BRAND | BRAND GROUP ID |
|---|---|
| BRAND B1 | 3 |
| : | : |
| BRAND B2 | 1 |

3006

| PRODUCTION BUSINESS OPERATOR | PRODUCTION BUSINESS OPERATOR GROUP ID |
|---|---|
| A PRODUCTION | A PRODUCTION |
| : | : |
| Z PRODUCTION | Z PRODUCTION |

OUTPUT 3011

| PRODUCTION AREA GROUP 1 | PRODUCTION AREA GROUP 2 | PRODUCTION AREA GROUP 3 | .. | DISMANTLING | PRE-HANDLING WEIGHT |
|---|---|---|---|---|---|
| 0 | 0 | 1 | .. | 0 | 0.05 |
| : | : | : | : | : | : |
| 0 | 0 | 0 | .. | 1 | 0.8 |

Fig. 27

START
CHANGE AMOUNT TRAINING DATA GENERATION UNIT ACQUIRES PAST HANDLING HISTORY IN HANDLING HISTORY STORAGE UNIT
S51
GENERATE EMPTY LIST FOR STORING CHANGE AMOUNT TRAINING DATA
S52
GENERATE CHANGE AMOUNT TRAINING DATA (NUMBER OF HANDLING HISTORIES IN BUSINESS OPERATOR)
S53
COLLECT HANDLING CONTENT AND VALUES OF POST-HANDLING WEIGHT AND LIKE FROM HANDLING HISTORY REGARDING PROCESSING IN BUSINESS OPERATOR, VALUES OF PRE-HANDLING WEIGHT AND LIKE FROM HANDLING HISTORY ADDED IMMEDIATELY BEFORE AND PRODUCTION INFORMATION FROM HANDLING HISTORY IN PRODUCTION PROCESS
S54
ADD HANDLING CONTENT, VALUES OF PRE-AND POST-HANDLING WEIGHTS, AND PRODUCTION INFORMATION TO LIST
S55
GENERATE CHANGE AMOUNT TRAINING DATA
S56
PRODUCTION INFORMATION GROUPING UNIT GROUPS PRODUCTION AREA FEATURE VECTOR, BRAND FEATURE VECTOR, AND PRODUCTION BUSINESS OPERATOR FEATURE VECTOR IN PRODUCTION INFORMATION FEATURE VECTOR STORAGE UNIT BASED ON SIMILARITY BETWEEN VECTORS, AND ALLOCATE PRODUCTION AREA GROUP ID, BRAND GROUP ID, AND PRODUCTION BUSINESS OPERATOR GROUP ID
S57
FOOD FEATURE VECTOR GENERATION UNIT REPLACES VALUES OF PRODUCTION AREA, BRAND, AND PRODUCTION BUSINESS OPERATOR IN LIST OF CHANGE AMOUNT TRAINING DATA WITH PRODUCTION AREA GROUP ID, BRAND GROUP ID, AND PRODUCTION BUSINESS OPERATOR GROUP ID TO WHICH VALUES BELONG
S58
FOOD FEATURE VECTOR GENERATION UNIT PREPROCESSES EXPLANATORY VARIABLE IN LIST OF CHANGE AMOUNT TRAINING DATA TO GENERATE FOOD FEATURE VECTOR
S59
PREDICTION MODEL TRAINING UNIT LEARNS FOOD FEATURE VECTOR AND TARGET VARIABLE IN LIST OF CHANGE AMOUNT TRAINING DATA, AND GENERATES CHANGE AMOUNT PREDICTION MODEL THAT PREDICTS VALUES OF POST-HANDLING WEIGHT AND LIKE
S60
END

Fig. 28

START
ACQUIRE PRODUCTION AREA FEATURE VECTOR, BRAND FEATURE VECTOR, AND PRODUCTION BUSINESS OPERATOR FEATURE VECTOR FROM PRODUCTION INFORMATION FEATURE VECTOR STORAGE UNIT
S71
GROUPING PROCESS (TYPE OF FEATURE VECTOR)
S72
GROUP FEATURE VECTORS BASED ON SIMILARITY BETWEEN FEATURE VECTORS AND ALLOCATE GROUP ID
S73
STORE SET OF QUALITATIVE DATA ASSOCIATED WITH FEATURE VECTOR AND GROUP ID IN CLASSIFICATION RESULT STORAGE UNIT AND TRANSMIT THE SET TO HANDLING HISTORY SHAPING UNIT
S74
STORE SET OF GROUP ID AND CENTROID VECTOR IN CENTROID VECTOR STORAGE UNIT
S75
GROUPING PROCESS
S76
END

Fig. 29

PRODUCTION INFORMATION ASSOCIATING UNIT

34

INPUT

| PRODUCTION AREA (MAIN KEY) | ANNUAL AVERAGE TEMPERATURE | MONTHLY HIGHEST TEMPERATURE | .. | ANNUAL NUMBER OF PRECIPITATION DAYS |
|---|---|---|---|---|
| HOKKAIDO | 0.49 | 0.22 | .. | -1.09 |
| NAGANO | 3.37 | -0.23 | : | 0.87 |

3012

| BRAND (MAIN KEY) | TYPE C1 | TYPE C2 | .. | AVERAGE BODY WEIGHT |
|---|---|---|---|---|
| BRAND B3 | 1 | 0 | .. | 0.7 |

3013

| PRODUCTION BUSINESS OPERATOR (MAIN KEY) | PIG HOUSE | GRAZING | .. | MONTHLY SHIPPED NUMBER |
|---|---|---|---|---|
| AA PRODUCTION | 1 | 0 | .. | 0.32 |
| : | : | : | : | : |
| AZ PRODUCTION | 0 | 1 | .. | 0.54 |

3014

| PRODUCTION AREA GROUP ID (MAIN KEY) | ANNUAL AVERAGE TEMPERATURE | MONTHLY HIGHEST TEMPERATURE | .. | ANNUAL NUMBER OF PRECIPITATION DAYS |
|---|---|---|---|---|
| 1 | 0.49 | 0.22 | .. | -1.09 |
| : | : | : | : | : |
| n | 3.37 | -0.23 | .. | 0.87 |

3007

| BRAND GROUP ID (MAIN KEY) | TYPE C1 | TYPE C2 | .. | AVERAGE BODY WEIGHT |
|---|---|---|---|---|
| 1 | 1 | 0 | .. | 0.6 |
| : | : | : | : | : |
| m | 0 | 0 | .. | 0.8 |

3008

| PRODUCTION BUSINESS OPERATOR GROUP ID (MAIN KEY) | PIG HOUSE | GRAZING | .. | MONTHLY SHIPPED NUMBER |
|---|---|---|---|---|
| 1 | 1 | 0 | .. | 0.32 |
| : | : | : | : | : |
| k | 0 | 1 | .. | 0.54 |

3009

Fig. 30

PRODUCTION INFORMATION ASSOCIATING UNIT ~ 34

OUTPUT

3015

| PRODUCTION AREA (MAIN KEY) | PRODUCTION AREA GROUP ID |
|---|---|
| HOKKAIDO | 4 |
| NAGANO | 2 |

3016

| BRAND (MAIN KEY) | BRAND GROUP ID |
|---|---|
| BRAND B3 | 3 |

3017

| PRODUCTION BUSINESS OPERATOR (MAIN KEY) | PRODUCTION BUSINESS OPERATOR GROUP ID |
|---|---|
| AA PRODUCTION | 3 |
| : | : |
| AZ PRODUCTION | 2 |

Fig. 31

START
ACQUIRE PRODUCTION AREA FEATURE VECTOR, BRAND FEATURE VECTOR, AND PRODUCTION BUSINESS OPERATOR FEATURE VECTOR RELATED TO NEW PRODUCTION AREA, BRAND, AND PRODUCTION BUSINESS OPERATOR FROM PRODUCTION INFORMATION FEATURE VECTOR STORAGE UNIT
S81
ACQUIRE SET OF PRODUCTION AREA GROUP ID AND CENTROID VECTOR, SET OF BRAND GROUP ID AND CENTROID VECTOR, AND SET OF PRODUCTION BUSINESS OPERATOR GROUP ID AND CENTROID VECTOR FROM CENTROID VECTOR STORAGE UNIT
S82
S83
CALCULATE DISTANCE BETWEEN PRODUCTION AREA FEATURE VECTOR AND CENTROID VECTOR OF PRODUCTION AREA GROUP
S85
CALCULATE DISTANCE BETWEEN BRAND FEATURE VECTOR AND CENTROID VECTOR OF BRAND GROUP
S87
CALCULATE DISTANCE BETWEEN PRODUCTION BUSINESS OPERATOR FEATURE VECTOR AND CENTROID VECTOR OF PRODUCTION BUSINESS OPERATOR GROUP
S84
STORE SET OF PRODUCTION AREA GROUP ID OF PRODUCTION AREA GROUP HAVING SHORTEST DISTANCE AND NEW PRODUCTION AREA IN CLASSIFICATION RESULT STORAGE UNIT
S86
STORE SET OF BRAND GROUP ID OF BRAND GROUP HAVING SHORTEST DISTANCE AND NEW BRAND IN CLASSIFICATION RESULT STORAGE UNIT
S88
STORE A SET OF PRODUCTION BUSINESS OPERATOR GROUP ID OF PRODUCTION BUSINESS OPERATOR GROUP HAVING SHORTEST DISTANCE AND NEW PRODUCTION BUSINESS OPERATOR IN CLASSIFICATION RESULT STORAGE UNIT
END

Fig. 32

15
HANDLING HISTORY CREATION UNIT
22
PRODUCTION INFORMATION COMBINATION STORAGE UNIT
32
CLASSIFICATION RESULT STORAGE UNIT
14b
ABNORMALITY DETECTION UNIT
141
EXPLANATORY VARIABLE COLLECTION UNIT
145
PRODUCTION INFORMATION COMBINATION COVERAGE UNIT
142b
FOOD FEATURE VECTOR GENERATION UNIT
13
PREDICTION MODEL STORAGE UNIT
146
CHANGE AMOUNT PREDICTION UNIT
HANDLING HISTORY CONSISTENCY DETERMINATION UNIT
143
17
HANDLING HISTORY STORAGE UNIT

Fig. 33

START
INPUT HANDLING HISTORY
S91
COLLECT HANDLING CONTENT, VALUES OF PRE-HANDLING WEIGHT AND LIKE, AND PRODUCTION INFORMATION FROM PAST HANDLING HISTORY RELATED TO FOOD SAME AS THAT OF INPUT HISTORY
S92
GENERATE VERIFICATION DATA IN WHICH ALL COMBINATIONS FOR PRODUCTION INFORMATION ARE INCLUDED BASED ON HANDLING CONTENT, VALUES OF PRE-HANDLING WEIGHT AND LIKE, AND COMBINATION OF PRODUCTION INFORMATION IN PRODUCTION INFORMATION COMBINATION STORAGE UNIT
S93
REPLACE PRODUCTION INFORMATION INCLUDED IN COLLECTION DATA AND PRODUCTION INFORMATION INCLUDED IN VERIFICATION DATA WITH PRODUCTION AREA GROUP ID, BRAND GROUP ID, AND PRODUCTION BUSINESS OPERATOR GROUP ID
S94
PREPROCESSES COLLECTION DATA, AND GENERATE FOOD FEATURE VECTOR
S95
PREPROCESSES VERIFICATION DATA, AND GENERATE FOOD FEATURE VECTOR
S96
PREDICT POST-HANDLING WEIGHT FROM CHANGE AMOUNT PREDICTION MODEL IN PREDICTION MODEL STORAGE UNIT AND FOOD FEATURE VECTOR BASED ON COLLECTION DATA
S97
B

Fig. 34

B
PREDICT POST-HANDLING WEIGHT FROM CHANGE AMOUNT PREDICTION MODEL IN PREDICTION MODEL STORAGE UNIT AND FOOD FEATURE VECTOR BASED ON VERIFICATION DATA
S98
CALCULATE PREDICTION ERROR FROM PREDICTION VALUE AND INPUT HANDLING HISTORY
S99
S100
PREDICTION ERROR IN COLLECTION DATA IS MINIMUM?
YES
NO
DETERMINE AS NORMAL
S101
DETERMINE AS ABNORMAL
S103
TRANSMIT INPUT HANDLING HISTORY TO HANDLING HISTORY DISTRIBUTION MANAGEMENT UNIT
S102
NOTIFY USER OF INPUT HANDLING HISTORY, VERIFICATION DATA HAVING SMALLEST PREDICTION ERROR, AND PREDICTION VALUE IN COLLECTION DATA
S104
END

Fig. 35

10c
TRAINING PROCESS
TRACEABILITY SYSTEM
11b
HANDLING HISTORY SHAPING UNIT
12
PREDICTION MODEL TRAINING UNIT
13
PREDICTION MODEL STORAGE UNIT
HANDLING HISTORY CREATION UNIT
15
HANDLING HISTORY TRACKING UNIT
18
14b
ABNORMALITY DETECTION UNIT
21
PRODUCTION INFORMATION COMBINATION CREATION UNIT
31
PRODUCTION INFORMATION GROUPING UNIT
32
CLASSIFICATION RESULT STORAGE UNIT
HANDLING HISTORY DISTRIBUTION MANAGEMENT UNIT
16
22
PRODUCTION INFORMATION COMBINATION STORAGE UNIT
HANDLING HISTORY STORAGE UNIT
17
HANDLING HISTORY FOOD-BASED CLASSIFICATION UNIT
41
CLASSIFICATION PROCESS
33
PRODUCTION INFORMATION FEATURE VECTOR STORAGE UNIT
34
PRODUCTION INFORMATION ASSOCIATING UNIT
35
CENTROID VECTOR STORAGE UNIT

Fig. 36

P41
BIRTH REGISTRATION
• FOOD ID
• PRODUCTION AREA
• BRAND
• GENDER
• PRODUCTION BUSINESS OPERATOR NAME
• WEIGHT
P42
TREATMENT
• FOOD ID
• TREATMENT CONTENT
• BUSINESS OPERATOR NAME
• WEIGHT AFTER TREATMENT
• PREVIOUS POINTER
P43
TRANSACTION
• FOOD ID
• ARRIVAL/SHIPPING
• BUSINESS OPERATOR NAME
• WEIGHT AFTER TREATMENT
• PREVIOUS POINTER

Fig. 37

HANDLING HISTORY FOOD-BASED CLASSIFICATION UNIT
41
INPUT
BIRTH REGISTRATION
·001
·KAGAWA PREFECTURE
·BRAND B1
·MALE
·A PRODUCTION
·3kg
P1
BIRTH REGISTRATION
·002
·KAGAWA PREFECTURE
·BRAND B1
·FEMALE
·A PRODUCTION
·4kg
P2
TRANSACTION
·001
·SHIPPING
·A PRODUCTION
·100kg
·PREVIOUS POINTER
P3
TRANSACTION
·002
·ARRIVAL
·A SLAUGHTER
·100kg
·PREVIOUS POINTER
P9
TREATMENT
·001
·SALES
·A SALES
·50kg
·PREVIOUS POINTER
P10
HANDLING HISTORY STORAGE UNIT
17
OUTPUT
BIRTH REGISTRATION
• 001
• KAGAWA PREFECTURE
• BRAND B1
• MALE
• A PRODUCTION
• 3kg
P51
TREATMENT
• 001
• SHIPPING
• A PRODUCTION
• 100kg
• PREVIOUS POINTER
P52
TREATMENT
• 001
• ARRIVAL
• A SLAUGHTER
• 100kg
• PREVIOUS POINTER
P53
TREATMENT
• 001
• DISMANTLING
• A SLAUGHTER
• 70kg
• PREVIOUS POINTER
P54
TREATMENT
• 001
• SALES
• A SALES
• 50kg
• PREVIOUS POINTER
P60

Fig. 38

START
S111
FOOD-BASED CLASSIFICATION PROCESS
(NUMBER OF HANDLING HISTORIES)
S112
INPUT OF PAST HANDLING HISTORY
S113
IS THERE LIST
OF HANDLING HISTORIES RELATED
TO SAME FOOD?
YES
NO
S114
NEWLY CREATE LIST STORING
HANDLING HISTORY RELATED TO SAME FOOD
S115
ADD HANDLING HISTORY TO LIST OF
HANDLING HISTORIES RELATED TO SAME FOOD
S116
FOOD-BASED CLASSIFICATION PROCESS
S117
TRANSMIT LIST OF HANDLING HISTORY CLASSIFIED
BY FOOD TO HANDLING HISTORY SHAPING UNIT
END

Fig. 39

900
COMPUTER
906
MEMORY
910
INPUT/OUTPUT I/F
902
BUS
PROCESSOR
STORAGE DEVICE
NETWORK I/F
904
908
912

Fig. 40

## INTERNATIONAL SEARCH REPORT

International application No.
**PCT/JP2023/044510**

**A. CLASSIFICATION OF SUBJECT MATTER**

***G06Q 10/0833***(2023.01)i
FI: G06Q10/0833

According to International Patent Classification (IPC) or to both national classification and IPC

**B. FIELDS SEARCHED**

Minimum documentation searched (classification system followed by classification symbols)

G06Q10/0833

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | 高橋祐太, 偽装防止による水産物の安全なトレーサビリティ実用化技術, FIT2005 第4回情報科学技術フォーラム 一般講演論文集 第4分冊 ネットワークコンピューティング ユビキタス•マルチメディア・セキュリティ 教育・人文科学 情報システム, Forum on Information Technology 2005, 22 September 2005 (received date), (TAKAHASHI, Yuta, Practical investigation of secure traceability technology for fishery products using falsification prevention method, Collection of public speeches of the 4th Information Technology Forum, vol. 4, Network Computing Ubiquitous Multimedia Security Education Humanities Information System) pages 279, 280 | 1-20 |
| A | JP 2014-209096 A (FUJI OIL CO., LTD.) 06 November 2014 (2014-11-06) entire text, all drawings | 1-20 |
| A | CN 105092628 A (INSTITUTE OF AGRICULTURAL QUALITY STANDARD AND INSPECTION TECHNOLOGY, CHINA ACADEMY OF AGRICULTURAL SCIENCES) 25 November 2015 (2015-11-25) entire text, all drawings | 1-20 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **05 February 2024** | **13 February 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2023/044510**

| Patent document cited in search report | Publication date (day/month/year) | Patent family member(s) | Publication date (day/month/year) |
|---|---|---|---|
| JP 2014-209096 A | 06 November 2014 | (Family: none) | |
| CN 105092628 A | 25 November 2015 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6785701 B
- JP 2023021783 A